# EUROPEAN PATENT APPLICATION

(11) **EP 1 931 164 A1**
(43) Date of publication of application: **11.06.2008**
(21) Application number: 06810269.8
(22) Date of filing: 19.09.2006
(51) Int. Cl.: H04Q 7/38, H04B 7/26, H04M 1/00

(54) **COMMUNICATION DEVICE**

(30) Priority: 26.09.2005 JP 2005277750
(71) Applicant: Matsushita Electric Industrial Co., Ltd., Kadoma-shi Osaka 571-8501 (JP)
(72) Inventor: HATANO, Kouji, Matsushita Elect. Industrial Co.,Ltd., 2-1-61,Shiromi,Chuo-ku, Osaka 540-6207 (JP); USHIJIMA, Tetsuya, Matsushita Elect. Industrial Co.,Ltd., 2-1-61,Shiromi,Chuo-ku, Osaka 540-6207 (JP)
(74) Representative: Grünecker, Kinkeldey, Stockmair & Schwanhäusser Anwaltssozietät
(86) International application number: PCT/JP2006/318527
(87) International publication number: WO 2007/034788

(57) **Abstract**

A portable telephone terminal which, even in the case where the life scene of the user is not restricted to the location and the time, automatically performs an incoming call operation depending on the life scene is provided.

A portable telephone terminal 1 has: short-range wireless communicating means 30 for obtaining a peripheral-device identifier 301 by wireless from a portable telephone terminal existing at a short distance; communicating means 20 for executing a communicating process, and outputting a calling party identifier 201 which identifies a calling party; and communication operation determining means 40 for determining an operation of the communicating means 20. The communication operation determining means 40 determines the operation of the communicating means 20 on the basis of the peripheral-device identifier 301 and the calling party identifier 201.

## Description

### <Technical Field>

The present invention relates to a communication device in which a communication operation is automatically determined depending on the surrounding circumstances.

### <Background Art>

Because of expansion of a service area of a portable telephone system, a communication or call using a portable telephone terminal becomes enabled at various locations and time zones. However, there is a case where, depending on a situation of the user (hereinafter, referred to as "life scene"), an incoming call to a portable telephone terminal adversely affects the surrounding. At an important conference, meeting with the customer, or the like, when the user responds to an incoming call from a family member or a friend, for example, this response may offend the company.

In order to cope with the problem, a portable telephone terminal in which an incoming call operation can be changed depending on the life scene and the caller was early commercialized. In a portable telephone terminal having a silent mode function, when the user sets the mode depending on the life scene, for example, the method of notifying of an incoming call can be changed. Also a portable telephone having a function of rejecting an incoming call in accordance with the calling party is already commercialized. When the user sets the incoming call rejection, the incoming call operation of a portable telephone terminal can be changed depending on the calling party.

In a conventional portable telephone in which the mode setting or the incoming call rejection is manually performed by the user, the user must perform a mode switching operation in each case in accordance with a change of the life scene, and hence the operation is cumbersome. Furthermore, there is a case where, because of forgetting the switching of the setting, an incoming call tone is sounded despite the intentions of the user, and people around the user are bothered.

In order to solve the problems, a technique of automatically changing the incoming call operation in accordance with the surrounding circumstances has been proposed. For example, Patent Reference 1 discloses a communication apparatus comprising a function of allowing and inhibiting an incoming call in accordance with a predetermined schedule. According to these inventions, when the user previously determines a schedule, an operation at an incoming call can be automatically changed even when the user does not perform a setting operation at each life scene.

Patent Reference 2 discloses an incoming call tone controlling method in which an incoming call is controlled by a radio signal transmitted from a transmitter that is disposed in the vicinity of a gateway of a specific area. According to these inventions, even when the user does not perform a setting operation, an operation at an incoming call can be automatically changed simply by the entrance and exit of the user into and from the specific area.

Patent Reference 3 discloses a wireless portable terminal device which detects by position detection that the portable terminal is a specific area, to change the incoming call receiving method. According to the invention, even when the user does not perform a setting operation, an operation at an incoming call can be automatically changed simply by the entrance and exit of the user into and from the specific area.

Patent Reference 4 discloses a calling/receiving regulating and controlling system which regulates calling and receiving operations on the basis of the external-noise pattern. According to the invention, even when the user does not perform a setting operation, an operation at an incoming call can be automatically changed when the user is at a location where specific external noises are generated.
Patent Reference 1: JP-A-2000-295342
Patent Reference 2: JP-A-2003-319456
Patent Reference 3: JP-A-2001-103554
Patent Reference 4: JP-A-2004-15571

### <Disclosure of the Invention>

### <Problems that the Invention is to Solve>

In the communication apparatus disclosed in Patent Reference 1, however, there is a problem that, when the actual life scene fails to coincide with the predetermined schedule because of a change of the schedule of the user, or the like, an incoming call operation according to the life scene is not performed. In order to enable the apparatus to always perform an incoming call operation according to the actual life scene, the user must correct the setting of the schedule each time when the schedule of the user is changed. Consequently, there is a problem that it takes a lot of trouble.

In the incoming call tone controlling method and wireless portable terminal device disclosed in Patent References 2 and 3, there is a problem that, in the case where the life scene is not restricted to a specific location, such as that where the user holds a business meeting while dining in a restaurant in which the user casually drops, an incoming call operation according to the life scene is not performed.

In the originating/incoming call regulating and controlling system disclosed in Patent Reference 4, there is a problem that, in the case where the life scene is not correlated with specific external noises, an incoming call operation according to the life scene is not performed.

The invention has been conducted in order to solve the conventional problems. It is an object of the invention to provide a communication device which, even in the case where the life scene is not correlated with a location, a time, or external noises, a communication operation is automatically determined depending on the life scene.

The term "connecting operation" used in the specification means a processing operation performed in the case where the communication device is connected with another communication device, and includes operations such as allowance or inhibition of calling, and operations such as rejection of an incoming call, sending of a reply message, recording of communication voice, and notification of an incoming call.

### <Means for Solving the Problems>

In order to solve the conventional problems, the communication device of the invention comprises: short-range wireless communicating means for, from a peripheral device existing at a short distance, obtaining information of the peripheral device by wireless, and outputting a peripheral-device identifier which identifies the peripheral device; communicating means for executing a communicating process, and outputting a calling party identifier which identifies a calling party; and communication operation determining means for determining an operation of the communicating means, and the communication operation determining means determines the operation of the communicating means on the basis of the peripheral-device identifier and the calling party identifier.

According to the configuration, a communication operation for each calling party can be determined depending on a peripheral device existing at a short distance from the user. Even in the case where the life scene is not restricted to a location, a time, external noises, and a moving velocity, therefore, it is possible to automatically determine the communication operation depending on the life scene.

In the communication device of the invention, the communication operation determining means derives a situation identifier indicating a situation of a periphery of the communication device, from the peripheral-device identifier, and the communication operation determining means determines the operation of the communicating means on the basis of the situation identifier.

According to the configuration, the situation of the user can be identified from a peripheral device existing at a short distance from the user, and a communication operation for each calling party can be determined. Even in the case where the life scene is not restricted to a location, a time, external noises, and a moving velocity, therefore, it is possible to automatically determine the communication operation depending on the life scene.

In the communication device of the invention, the situation identifier includes information identifying a user of the peripheral device or a group to which the user of the peripheral device belongs.

According to the configuration, it is possible to, from a peripheral device existing at a short distance from the user, identify who is at a short distance, and determine a communication operation for each calling party. Even in the case where the life scene is not restricted to a location, a time, external noises, and a moving velocity, therefore, it is possible to automatically determine the communication operation depending on the life scene.

In the communication device of the invention, the communication operation determining means determines the operation of the communicating means on the basis of user information indicating a correspondence between the situation identifier and the calling party identifier.

According to the configuration, a communication operation can be determined by the relationship between the situation of the user and the calling party. Even in the case where the life scene is not restricted to a location, a time, external noises, and a moving velocity, therefore, it is possible to automatically determine the communication operation depending on the life scene.

In the communication device of the invention, the user information includes information indicating a correspondence between the peripheral-device identifier and the situation identifier, and the communication operation determining means derives the situation identifier from the peripheral-device identifier on the basis of the user information.

According to the configuration, it is possible to associate a peripheral device existing at a short distance from the user with the situation of the user. Even in the case where the life scene is not restricted to a location, a time, external noises, and a moving velocity, therefore, it is possible to automatically determine the communication operation depending on the life scene.

The communication device of the invention comprises user information setting means for setting the user information.

According to the configuration, the user can set the correspondence between the situation of the user and the calling party, or that between a peripheral device existing at a short distance from the user and the situation of the user. Even in the case where the life scene is not restricted to a location, a time, external noises, and a moving velocity, therefore, it is possible to automatically determine the communication operation depending on the life scene for each user.

The communication device of the invention comprises operation state notifying means for notifying of a state of the operation determined by the communication operation determining means.

According to the configuration, the communication operation for each calling party which is determined by a peripheral device existing at a short distance from the user is notified to the user. Even in the case where the life scene is not restricted to a location, a time, external noises, and a moving velocity, therefore, it is possible to automatically determine the communication operation depending on the life scene, and the user can check the determined communication operation.

In the communication device of the invention, the short-range wireless communicating means transmits an own-device identifier which identifies the communication device, to the peripheral device.

According to the configuration, another device which exists at a short distance from the user, and which has the configuration of the invention can identify the own device. Even in the case where the life scene is not restricted to a location, a time, external noises, and a moving velocity, therefore, both the own device and the other device can automatically determine the communication operation depending on the life scene.

Furthermore, a portable telephone terminal is configured so as to comprise the communication device of the invention, an audio inputting device, an audio outputting device, an incoming call notifying device, an operation inputting device, and a display device.

According to the configuration, it is possible to provide a portable telephone terminal in which, even in the case where the life scene is not restricted to a location, a time, external noises, and a moving velocity, it is possible to automatically determine the communication operation depending on the life scene.

### <Effects of the Invention>

According to the invention, the communication operation for each calling party is determined depending on a peripheral device existing at a short distance from the user, whereby, even in the case where the life scene is not restricted to a location, a time, external noises, and a moving velocity, the communication operation depending on the life scene can be automatically determined. Therefore, the user is not required to perform an operation of changing the setting of the communication operation each time when the life scene is changed, and the convenience is improved.

### <Brief Description of the Drawings>

Fig. 1 is a schematic diagram of a portable telephone terminal of Embodiments 1 to 4 of the invention.
Fig. 2 is a detailed diagram of the portable telephone terminal of Embodiments 1 to 4 of the invention.
Fig. 3 is an external view of the portable telephone terminal of Embodiments 1 to 4 of the invention.
Fig. 4 is a view illustrating contents of a personal-information table in Embodiments 1, 3, 4, 6, and 7 of the invention.
Fig. 5(a) is a view illustrating contents of an incoming call operation table in Embodiment 1 of the invention, and Fig. 5(b) is a view illustrating contents of the incoming call individual operation table in Embodiment 1 of the invention.
Fig. 6 is a view illustrating contents of a reply message table in Embodiment 1 of the invention.
Fig. 7 is a flowchart showing a process procedure of communication operation determining means in Embodiment 1 of the invention.
Fig. 8 is a view illustrating a first life scene in Embodiments 1, 3, and 4 of the invention.
Fig. 9 is a view illustrating a second life scene in Embodiments 1, 3, and 4 of the invention.
Fig. 10 is a view illustrating a third life scene in Embodiments 1, 3, and 4 of the invention.
Fig. 11 is a view illustrating contents of a personal-information table in Embodiment 2 of the invention.
Fig. 12 is a view illustrating contents of an incoming call operation table in Embodiment 2 of the invention.
Fig. 13 is a view illustrating contents of a reply message table in Embodiment 2 of the invention.
Fig. 14 is a view illustrating a fourth life scene in Embodiment 2 of the invention.
Fig. 15 is a view illustrating contents of a situation priority table in Embodiment 3 of the invention.
Fig. 16 is a flowchart showing a process procedure of communication operation determining means in Embodiment 3 of the invention.
Fig. 17 is a view illustrating contents of a co-occurrence regulation table in Embodiment 4 of the invention.
Fig. 18 is a flowchart showing a process procedure of communication operation determining means in Embodiment 4 of the invention.
Fig. 19 is a schematic diagram of a portable telephone terminal of Embodiments 5 and 6 of the invention.
Fig. 20 is a detailed diagram of the portable telephone terminal of Embodiments 5 and 6 of the invention.
Fig. 21 is an external view of the portable telephone terminal of Embodiments 5 to 7 of the invention.
Fig. 22(a) is a first view illustrating contents of a personal-information table in Embodiment 5 of the invention, and Fig. 22(b) is a second view illustrating contents of the personal-information table in Embodiment 5 of the invention.
Fig. 23(a) is a first view illustrating a display example of an LCD 83 in Embodiment 5 of the invention, Fig. 23(b) is a second view illustrating a display example of the LCD 83 in Embodiment 5 of the invention, Fig. 23(c) is a third view illustrating a display example of the LCD 83 in Embodiment 5 of the invention, and Fig. 23(d) is a fourth view illustrating a display example of the LCD 83 in Embodiment 5 of the invention.
Fig. 24(a) is a first view illustrating contents of an incoming call operation table in Embodiment 5 of the invention, and Fig. 24(b) is a second view illustrating contents of the incoming call operation table in Embodiment 5 of the invention.
Fig. 25(a) is a third view illustrating contents of the incoming call operation table in Embodiment 5 of the invention, and Fig. 25(b) is a first view illustrating contents of an incoming call individual operation table in Embodiment 5 of the invention.
Fig. 26(a) is a fifth view illustrating a display example of the LCD 83 in Embodiment 5 of the invention, Fig. 26(b) is a sixth view illustrating a display example of the LCD 83 in Embodiment 5 of the invention, Fig. 26(c) is a seventh view illustrating a display example of the LCD 83 in Embodiment 5 of the invention, and Fig. 26(d) is an eighth view illustrating a display example of the LCD 83 in Embodiment 5 of the invention.
Fig. 27(a) is a ninth view illustrating a display example of the LCD 83 in Embodiment 5 of the invention, Fig. 27(b) is a tenth view illustrating a display example of the LCD 83 in Embodiment 5 of the invention, Fig. 27(c) is an eleventh view illustrating a display example of the LCD 83 in Embodiment 5 of the invention, and Fig. 27(d) is a twelfth view illustrating a display example of the LCD 83 in Embodiment 5 of the invention.
Fig. 28(a) is a first view illustrating contents of a co-occurrence regulation table in Embodiments 6 and 7 of the invention, and Fig. 28(b) is a second view illustrating contents of the co-occurrence regulation table in Embodiment 6 of the invention.
Fig. 29(a) is a first view illustrating a display example of an LCD 83 in Embodiment 6 of the invention, Fig. 29(b) is a second view illustrating a display example of the LCD 83 in Embodiment 6 of the invention, Fig. 29(c) is a third view illustrating a display example of the LCD 83 in Embodiment 6 of the invention, and Fig. 29(d) is a fourth view illustrating a display example of the LCD 83 in Embodiment 6 of the invention.
Fig. 30 is a schematic diagram of a portable telephone terminal of Embodiment 7 of the invention.
Fig. 31 is a detailed diagram of the portable telephone terminal of Embodiment 7 of the invention.
Fig. 32 is a flowchart showing a process procedure of communication operation determining means in Embodiment 7 of the invention.
Fig. 33(a) is a first view illustrating a display example of an LCD 83 in Embodiment 7 of the invention, and Fig. 33(b) is a second view illustrating a display example of the LCD 83 in Embodiment 7 of the invention.

### <Description of Reference Numerals and Signs>

- 1: portable telephone terminal
- 1-b: second portable telephone terminal
- 1-c: third portable telephone terminal
- 1-d: fourth portable telephone terminal
- 1-e: fifth portable telephone terminal
- 20: communicating means
- 201: calling party identifier
- 202: communication operation instructions
- 21: reply message holding means
- 30: short-range wireless communicating means
- 301: peripheral-device identifier
- 31: RFID reader
- 32: RFID tag
- 40: communication operation determining means
- 50: user information setting mean
- 51: user information holding means
- 511: user information
- 60: operation state notifying means
- 601: operation information notification instructions
- 71: microphone
- 711: uttered speech signal
- 72: speaker
- 721: incoming call tone signal
- 73: vibrator
- 731: vibrator driving signal
- 80: device managing section
- 801: display instructions
- 802: operation notification
- 81: arrow key
- 82: numeric keypad
- 83: LCD
- T211, T212: reply message table
- T511, T512, T513, T514: personal-information table
- T521, T522, T523, T524, T525: incoming call operation table
- T531, T535: incoming call individual operation table
- T541: situation priority table
- T551, T552, T553: co-occurrence regulation table
- U1: user
- U1-b: second user
- U1-c: third user
- U 1-d: fourth user
- U1-e: fifth user

### <Best Mode for Carrying Out the Invention>

Hereinafter, the best mode for carrying out the invention will be described with reference to the drawing. In the all figures for illustrating embodiments, identical components are denoted by the same reference numerals, and duplicated description will be omitted.

### (Embodiment 1)

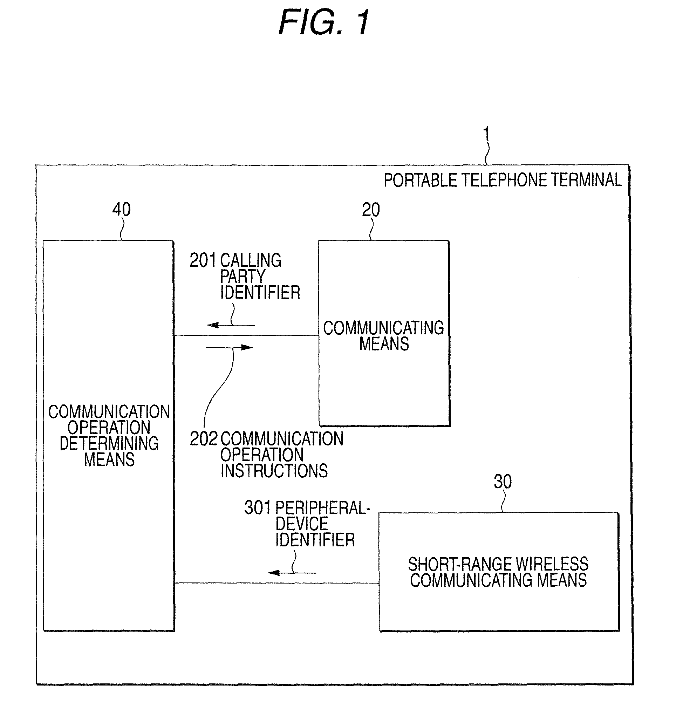

Fig. 1 is a schematic diagram of a portable telephone terminal 1 of Embodiment 1 of the invention. Referring to Fig. 1, the portable telephone terminal 1 comprises communicating means 20, short-range wireless communicating means 30, and communication operation determining means 40.

The communicating means 20 is a portion which performs a communicating process, and connects the portable telephone terminal 1 with a wireless communication line (not shown) to conduct communication. The communicating means 20 executes the communicating process on the basis of communication operation instructions 202 for instructing a communication operation. At an incoming call, the communicating means 20 obtains information of the calling party from the wireless communication line, and outputs a calling party identifier 201 which identifies the calling party.

The short-range wireless communicating means 30 in Fig. 1 is means for communicating with a peripheral device existing at a short distance by wireless. The short-range wireless communicating means 30 obtains information of a peripheral device existing at a short distance, and outputs a peripheral-device identifier 301 which identifies the peripheral device.

The communication operation determining means 40 determines the operation of the communicating means 20 on the basis of the calling party identifier 201 and the peripheral-device identifier 301, and outputs communication operation instructions 202.

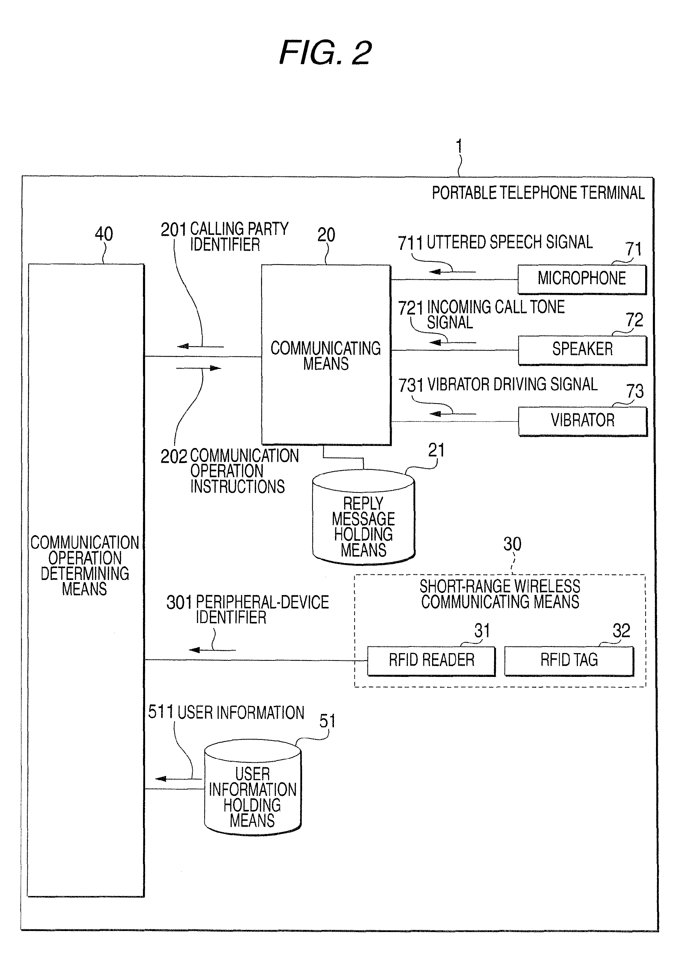

Fig. 2 is a diagram showing in further detail the portable telephone terminal 1 of Embodiment 1 of the invention. Referring to Fig. 2, the portable telephone terminal 1 comprises reply message holding means 21, a microphone 71, a speaker 72, a vibrator 73, an RFID reader 31, an RFID tag 32, and user information holding means 51.

The reply message holding means 21 holds voice messages for automatically replying to the calling party at an incoming call. The microphone 71 converts uttered speech of the user into an uttered speech signal which is an electric signal, and outputs the signal to the communicating means 20. The speaker 72 receives an incoming call tone signal 721 which is an electric signal for notifying of an incoming call, from the communicating means 20, and converts the signal into air vibrations to emit sound into the air. The vibrator 73 receives a vibrator driving signal 731 from the communicating means 20, and vibrates a case of the portable telephone terminal 1. The microphone 71 corresponds to the audio inputting device set forth in the claims, the speaker 72 to the audio outputting device and incoming call notifying device set forth in the claims, and the vibrator 73 to the incoming call notifying device set forth in the claims.

The RFID reader 31 communicates with an RFID tag provided in a peripheral device existing at a short distance outside the portable telephone terminal 1, to obtain an RFID, and outputs the peripheral-device identifier 301 which identifies the peripheral device. The RFID tag 32 communicates with an RFID reader provided in a peripheral device existing at a short distance outside the portable telephone terminal 1, and transmits an own-device identifier which identifies the own device. The wireless communication operations of the RFID tag 32 and the RFID reader 31 are known techniques, and therefore their description will be omitted in the description. The RFID reader 31 and the RFID tag 32 are portions corresponding to the short-range wireless communicating means 30 in Fig. 1.

The user information holding means 51 holds user information 511 which is to be referred by the communication operation determining means 40 in order to determine the communication operation.

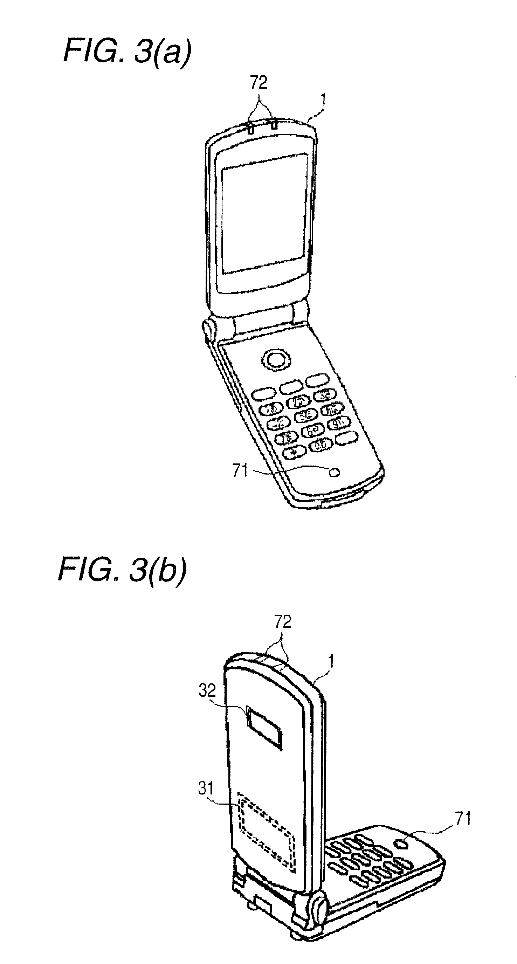

Fig. 3 is an external view of the portable telephone terminal 1 of Embodiment 1 of the invention. Fig. 3(a) is an external view of the portable telephone terminal 1 as viewed from the direction of an opened portion, and Fig. 3(b) is an external view of the portable telephone terminal 1 as viewed from the direction of the rear side of the opened portion. Referring to Fig. 3, the portable telephone terminal 1 comprises the speaker 72 and the microphone 71 on the surface of the case, and has the RFID reader 31 and the RFID tag 32 inside the case. A plastic member is used in a portion which covers the RFID reader 31 and the RFID tag 32, so that an electromagnetic wave for wireless communication can pass therethrough.

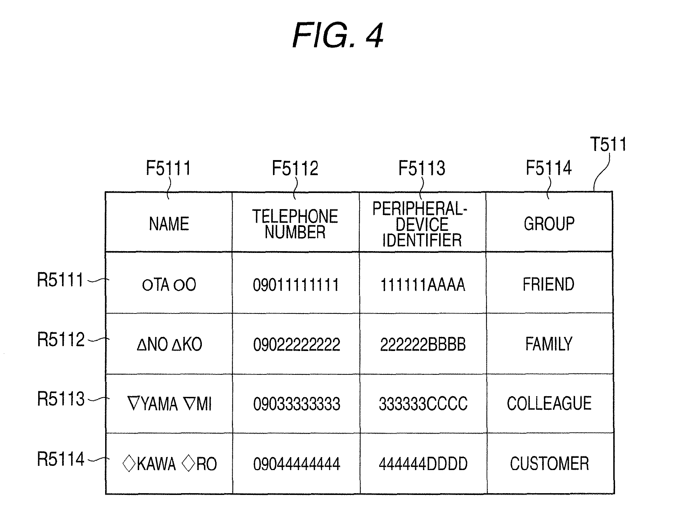

Fig. 4 is a view showing an example of a personal-information table which is held as the user information 511 in Embodiment 1 of the invention by the user information holding means 51. The personal-information table T511 stores information of a portable telephone terminal which is a peripheral device existing outside the portable telephone terminal 1 (hereinafter, referred to as "external terminal"), and the user of the external terminal.

The personal-information table T511 consists of records R5111 to R5114 respectively for external terminals. Fields F5111 to F5114 in each of the records R5111 to R5114 store the name of the user of an external terminal, the telephone number of the external terminal, a peripheral-device identifier which is obtained by the RFID reader 31 as a result of communication with the external terminal at a short distance from the external terminal, and a group to which the user of the external terminal belongs, respectively. The information stored in the name (F5111) and the group (F5114) corresponds to the situation identifier set forth in the claims. The information stored in the telephone number (F5112) corresponds to the calling party identifier set forth in the claims.

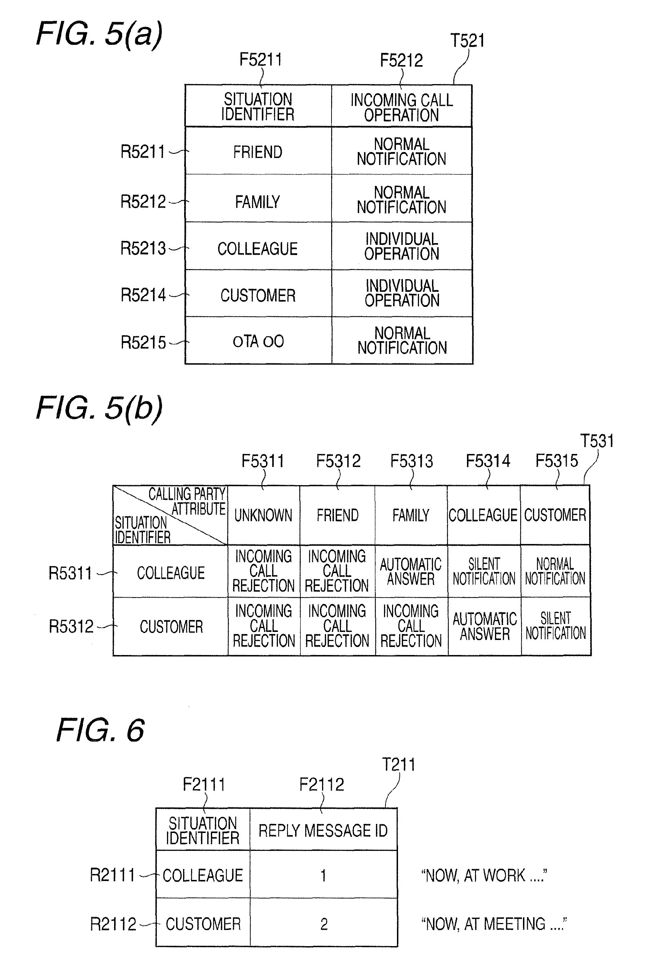

Fig. 5 is a view showing an example of an incoming call operation table and incoming call individual operation table which are held as the user information 511 in Embodiment 1 of the invention by the user information holding means 51. The incoming call operation table T521 and the incoming call individual operation table T531 describe an incoming call operation of the communicating means 20 in the case where the portable telephone terminal 1 receives an incoming call. The incoming call operation table T521 consists of records R5211 to R5215 respectively for situation identifiers. Fields F5211, F5212 in each of the records R5211 to R5215 store a situation identifier, and an operation at an incoming call, respectively.

The value "Normal notification" of the field F5212 of the incoming call operation table T521 indicates an operation of notifying of an incoming call in accordance with a default setting of incoming call notification. In the description, "default setting of incoming call notification" indicates initial set values of parameters such as a sounding/non-sounding, timbre, and volume of the incoming call tone, vibration/non-vibration, and a vibration pattern, and set values of the parameters which are previously set by the user with using a setting menu or the like. The value "Individual operation" of the field F5212 indicates an operation of notifying of an incoming call in accordance with the incoming call individual operation table T531.

The incoming call individual operation table T531 consists of records R5311, R5312 respectively for the situation identifiers. Fields F5311 to F5315 in each of the records R5311, R5312 store incoming call operations for respective calling party attributes. A calling party attribute indicates the attribute of a calling party which is derived from the calling party identifier 201 on the basis of the personal-information table T511. The name (F5111) and the group (F5114) correspond to the attribute. The field "Unknown" (F5311) stores an incoming call operation in the case where the calling party identifier 201 cannot be obtained because of the anonymous setting on the calling side.

The field value "Incoming call rejection" of the incoming call individual operation table T531 indicates that an incoming call is rejected (the incoming call notification is not performed, and a busy signal is returned to the calling side) in spite of the default setting of incoming call notification. Furthermore, "Automatic answer" indicates that automatic answering is performed (a replay message is sent to the calling side, and the speech sound of the calling party is recorded) in spite of the default setting of incoming call notification. Moreover, "Silent notification" indicates that an incoming call is notified without emitting a sound from the speaker 72 in spite of the default setting of incoming call notification.

Fig. 6 is a view showing an example of a reply message table which is held by the user information holding means 51 in Embodiment 1 of the invention. The reply message table T211 consists of records R2111, R2112 respectively for situation identifiers. Fields F2111, F2112 in each of the records R2111, R2112 store a situation identifier and a reply message ID, respectively. The reply message ID (F2112) is an ID for identifying plural reply messages held by the reply message holding means 21. In the embodiment, reply message ID = 1 indicates a reply message of "Now, at work", and ID = 2 indicates a reply message of "Now, at meeting".

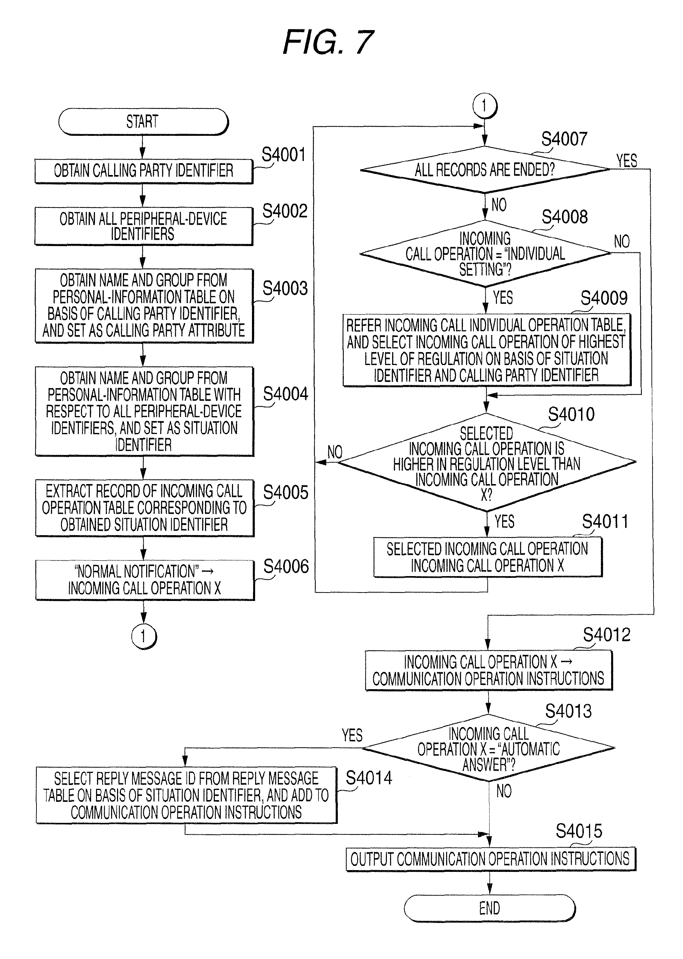

Fig. 7 is a flowchart showing a process procedure of the communication operation determining means 40 in the case where the portable telephone terminal 1 in Embodiment 1 of the invention receives an incoming call. In step S4001, first, the communication operation determining means 40 obtains the calling party identifier 201 from the communicating means 20. Next, the communication operation determining means 40 obtains in step S4002 the peripheral-device identifier 301 of a peripheral device existing at a short distance, from the RFID reader 31. If plural peripheral devices exist at a short distance from the RFID reader 31, the communication operation determining means 40 obtains the peripheral-device identifiers 301 of all of the peripheral devices existing at a short distance.

In step S4003, the communication operation determining means 40 obtains the name (F5111) and group (F5114) of the calling party from the calling party identifier 201 obtained in step S4001, on the basis of the personal-information table T511 (Fig. 4), and sets them as a calling party attribute. In step S4004, with respect to all of the peripheral-device identifiers 301 obtained in step S4002, the communication operation determining means 40 obtains the name (F5111) and group (F5114) of the user of a peripheral device existing at a short distance on the basis of the personal-information table T511 (Fig. 4), and sets them as a situation identifier.

In step S4005, the communication operation determining means 40 extracts the record of the incoming call operation table T521 (Fig. 5(a)) corresponding to the situation identifier obtained in step S4004. In step S4006, the communication operation determining means 40 temporarily sets "Normal notification" as a variable of "Incoming call operation X" indicative of a candidate of the incoming call operation, and then performs processes of step S4007 and subsequent steps.

Step S4007 is a branch where it is determined whether the processes of steps S4008 to S4011 have been completed on all of the records extracted in step S4005 from the incoming call operation table T521 (Fig. 5(a)) or not. If the communication operation determining means 40 has completed the processes of S4008 to S4011 on all of the records (YES), the means proceeds to step S4012.

In step S4008, the communication operation determining means 40 selects the value of the incoming call operation (F5212) of the record of the incoming call operation table T521 (Fig. 5(a)), as the incoming call operation. If the value is "Individual setting" (YES), the process proceeds to step S4009, and, if not (NO), the process proceeds to step S4010.

In step S4009, the communication operation determining means 40 refers the incoming call individual operation table T531 (Fig. 5(b)), and selects the incoming call operation of the highest level of regulation on the basis of the situation identifier obtained in step S4004, and the calling party attribute obtained in step S4003. Here, "level of regulation of the incoming call operation" is evaluated on the basis of a rule which is predetermined based on the level of an influence that is exerted on the periphery by the incoming call operation of the portable telephone terminal 1. In the embodiment, "Incoming call rejection", "Automatic answer", "Silent notification", and "Normal notification" are defined in the descending order of the level of the regulation.

In steps S4010 and S4011, the communication operation determining means 40 compares the regulation level of the incoming call operation which is selected by the processes performed in preceding and including step S4009, with that of the incoming call operation X which has been previously obtained, and sets an incoming call operation of a higher regulation level one, as the incoming call operation X. As a result of the processes of steps S4006 to S4011, the incoming call operation determining means 40 obtains the incoming call operation X which has the highest regulation level among incoming call operation candidates.

In step S4012, the incoming call operation determining means 40 sets the incoming call operation which has been set as the incoming call operation X, as the communication operation instructions. In steps S4013 and S4014, the incoming call operation determining means 40 obtains the reply message ID (F2112) on the basis of the reply message table T211 (Fig. 6), from the situation identifier which is obtained in step S4004 in the case where the automatic answer is obtained as the incoming call operation ("YES" in S4013), and adds it to the communication operation instructions (S4014). In step S4015, the communication operation determining means 40 outputs the communication operation instructions 202 which is obtained by the processes performed in preceding and including step S4014, and terminates the processing.

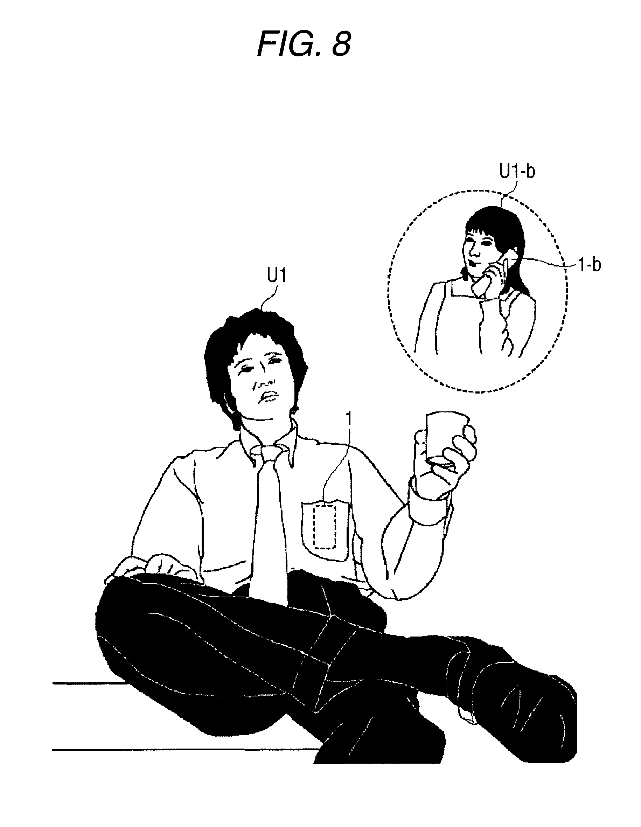

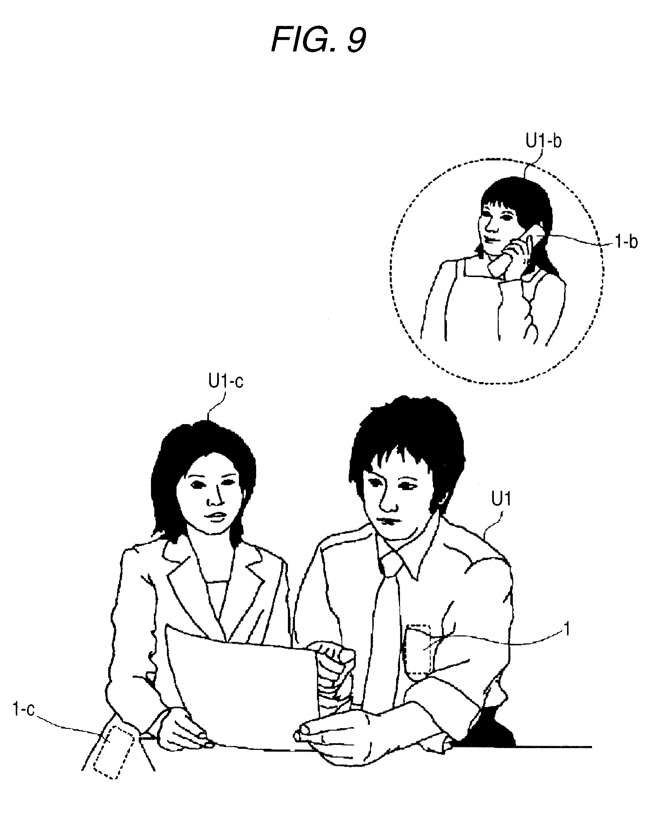

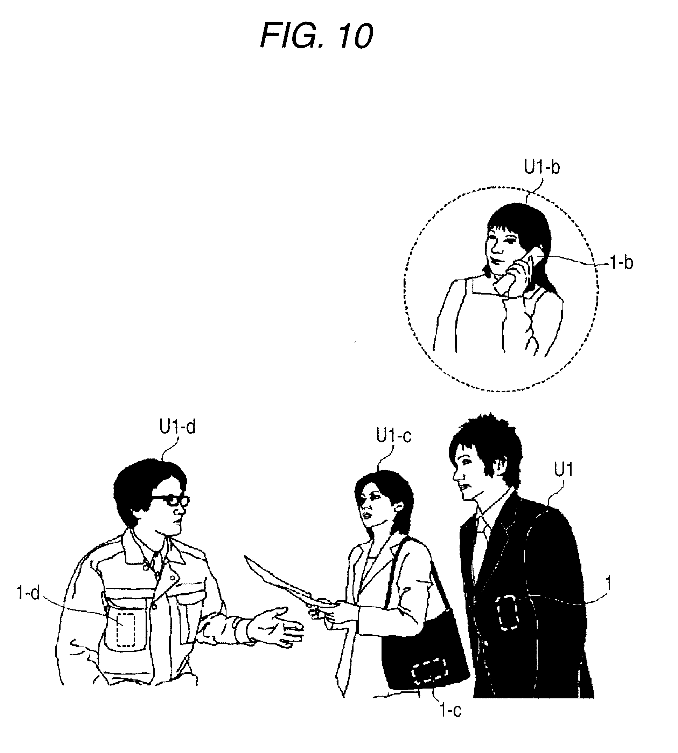

Figs. 8 to 10 are views illustrating examples of the life scene in which the portable telephone terminal 1 in Embodiment 1 of the invention is used. Fig. 8 shows a first situation where, in a first life scene in which the user U1 of the first portable telephone terminal 1 spends alone, a second portable telephone terminal 1-b which is used by Δno Δko U1-b who is a family member originates a call to the first portable telephone terminal 1. Fig. 9 shows a second situation where, in a second life scene in which the user U1 of the first portable telephone terminal 1 works with Vyama Vmi U1-c who is the user of a third portable telephone terminal 1-c, and who is a colleague, the second portable telephone terminal 1-b which is used by Δno Δko U1-b who is a family member originates a call to the first portable telephone terminal 1. Fig. 10 shows a third situation where, in a third life scene in which the user U1 of the first portable telephone terminal 1, his colleague Vyama Vmi U1-c who is the user of the third portable telephone terminal 1-c, and Okawa Oro U1-d who is the user of a fourth portable telephone terminal 1-d, and who is a customer are in a meeting, the second portable telephone terminal 1-b which is used by Δno Δko U1-b who is a family member originates a call to the first portable telephone terminal 1. In the description of the embodiments of the invention, it is assumed that specific conditions such as a location, a time, external noises, and a moving velocity are not imposed on the examples of the life scene, and the locations, times, external noises, and moving velocities in respective life scenes may be identical with or different from one another.

Hereinafter, the operation of the portable telephone terminal 1 of Embodiment 1 of the invention will be described with reference to Figs. 2 to 10. First, the operation of the portable telephone terminal 1 in the case of the first situation (Fig. 8) will be described. When the first portable telephone terminal 1 detects an incoming call from the second portable telephone terminal 1-b, the communication operation determining means 40 obtains a calling party identifier of "09022222222" in step S4001 of the flowchart of Fig. 7. In step S4003, the communication operation determining means 40 obtains calling party attributes of "Δno Δko" and "Family". On the other hand, an external terminal does not exist at a short distance from the first portable telephone terminal 1, and hence the records of the incoming call operation table T521 are not extracted as a result of the processes of steps S4002, S4004, and S4005. At the determination (YES) of step S4007, therefore, the processes of steps S4008 to S4011 are skipped, and the process proceeds to step S4012. In step S4012, consequently, the value "Normal notification" of the incoming call operation X which has been set in step S4006 is used as is as the communication operation instructions. Since the determination in next step S4013 is "NO", the communication operation determining means outputs in step S4015 the communication operation instructions 202 or "Normal notification".

The communicating means 20 receives the communication operation instructions 202 of "Normal notification", and notifies of the incoming call in accordance with the default setting of incoming call notification. In the case where the user previously sets so that the incoming call tone is sounded, the communicating means 20 outputs the incoming call tone signal 721, and the speaker 72 receives the signal, and sounds the incoming call tone. In the case where an external terminal does not exist at a short distance from the portable telephone terminal 1, namely, the portable telephone terminal 1 notifies of an incoming call in accordance with the default setting of incoming call notification.

Next, the operation of the portable telephone terminal 1 in the case of the second situation (Fig. 9) will be described. In the second situation, unlike in the first situation, the third portable telephone terminal 1-c which is an external terminal exists at a short distance from the first portable telephone terminal 1. In step S4002 of the flowchart of Fig. 7, therefore, the communication operation determining means 40 obtains a peripheral-device identifier of "333333CCCC". In step S4004, the communication operation determining means 40 obtains situation identifiers of "Vyama Vmi" and "Colleague". In step S4005, the communication operation determining means 40 obtains the record R5213 (Fig. 5(a)).

Since the determination in step S4007 is "NO", the communication operation determining means 40 proceeds to step S4008. In step S4008, the value of the incoming call operation field F5212 of the record R5213 is "Individual operation", and the determination is "YES". Therefore, the communication operation determining means 40 proceeds to step S4009. In step S4009, the communication operation determining means 40 selects the incoming call operation of "Automatic answer" which is the value of the field F5313 corresponding to the calling party attribute of "Family", from the record R5311 corresponding to the situation identifier of "Colleague". In step S4010, the regulation of the incoming call operation of "Automatic answer" is higher (YES) than the value "Normal notification" of the incoming call operation X, and therefore the communication operation determining means 40 proceeds to step S4011. In step S4011, the communication operation determining means 40 sets "Automatic answer" as the incoming call operation X. Since only one record is extracted in step S4005, the determination of next step S4007 is "YES", and the communication operation determining means 40 proceeds to step S4012.

In step S4012, the communication operation determining means 40 sets "Automatic answer" as the communication operation instructions. Since the determination of step S4013 is "YES", the communication operation determining means 40 proceeds to step S4014. In step S4014, the communication operation determining means 40 obtains the reply message ID of "1" corresponding to the situation identifier of "Colleague", from the reply message table T211 (Fig. 6), and adds the ID to the communication operation instructions of "Automatic answer", thereby obtaining the communication operation instructions of "Automatic answer, 1". In step S4015, finally, the communication operation determining means 40 outputs "Automatic answer, 1" to the communicating means 20, as the communication operation instructions 202.

The communicating means 20 receives the communication operation instructions 202 of "Automatic answer, 1", transmits the reply message of "Now, at work" to the second portable telephone terminal 1-b which is the calling terminal, and then performs an operation of recording the speech sound of Δno Δko U1-b who is the calling party. In the case where the portable telephone terminal 1-c of the colleague exists at a short distance from the portable telephone terminal 1, namely, the portable telephone terminal 1 performs automatic answering in response to an incoming call from a family member.

Finally, the operation of the portable telephone terminal 1 in the case of the third situation (Fig. 10) will be described. In the third situation, in addition to the third portable telephone terminal 1-c, the fourth portable telephone terminal 1-d exists at a short distance from the portable telephone terminal 1. In step S4002 of the flowchart of Fig. 7, therefore, the communication operation determining means 40 obtains peripheral-device identifiers of "333333CCCC" and "444444DDDD". In step S4004, the communication operation determining means 40 obtains situation identifiers of "Vyama Vmi", "Colleague", "◇kawa Oro", and "Customer". In step S4005, the communication operation determining means 40 obtains the records R5213, R5214 (Fig. 5(a)).

Since the determination in step S4007 is "NO", the communication operation determining means 40 proceeds to step S4008. In the first process of steps S4008 to S4011, the communication operation determining means 40 performs the process of the record R5213, and, in the same manner as the second situation (Fig. 9), sets "Automatic answer" as the incoming call operation X. In steps S4008 and S4009 of the second process of steps S4008 to S4011, the communication operation determining means 40 performs the process of the record R5214, and selects the incoming call operation of "Incoming call rejection"' which is the value of the field F5313 of the record R5312 in the incoming call individual operation table T531 (Fig. 5(b)). In the determination of step S4010, the incoming call operation of "Incoming call rejection" is higher in level of regulation than "Automatic answer" which is the value of the incoming call operation X, and therefore the communication operation determining means 40 sets "Incoming call rejection" as the incoming call operation X. After performing the processes of next steps S4012 to S4015, the communication operation determining means 40 outputs "Incoming call rejection" to the communicating means 20, as the communication operation instructions 202.

The communicating means 20 receives the communication operation instructions 202 of "Incoming call rejection", and returns the busy signal to the calling side without performing the incoming call operation. Even in the case where the portable telephone terminal 1-c of the colleague exists at a short distance from the portable telephone terminal 1 in the same manner as the second situation, when the portable telephone terminal 1-d of the customer exists at a short distance, the portable telephone terminal 1 performs the incoming call rejection which is an incoming call operation of a higher level of regulation, in response to an incoming call from a family member.

As described above, even when the portable telephone terminal 1 of Embodiment 1 of the invention receives an incoming call from the family member U1-b, the portable telephone terminal performs different incoming call operations depending on the first life scene in which the user U1 spends alone, the second life scene in which the user U1 works with the colleague U1-c, and the third life scene in which the user U1 has a meeting with the colleague U1-c and the customer U 1-d.

As apparent from the above description, in the portable telephone terminal of Embodiment 1 of the invention, the configuration in which the communication operation determining means 40 determines the operation of the communicating means 20 on the basis of the peripheral-device identifier 301 and the calling party identifier 201 allows the communication operation for each calling party to be determined depending on a peripheral device existing at a short distance from the user. Even in the case where the life scene is not restricted to a location, a time, external noises, and a moving velocity, therefore, it is possible to automatically determine the communication operation depending on the life scene.

### (Embodiment 2)

In Embodiment 2 of the invention, an embodiment which is used in a situation where the name or telephone number of an external terminal existing at a short distance from the portable telephone terminal 1 is not known will be described. Embodiment 2 of the invention will be described while assuming that the configuration, external view, and incoming call operation table of the portable telephone terminal 1, and the process procedure of the communication operation determining means 40 are identical with the configuration (Figs. 1 and 2), external view (Fig. 3), incoming call individual operation table T531 (Fig. 5(b)), and flowchart (Fig. 7) which are used in the description of Embodiment 1 of the invention.

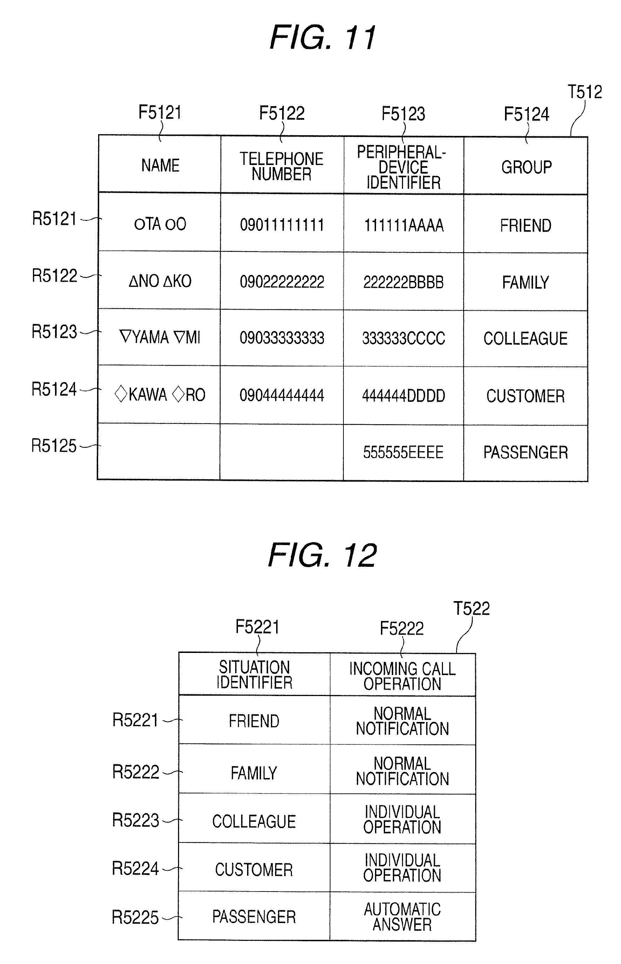

Fig. 11 is a view showing a personal-information table T512 which is held by the user information holding means 51 as the user information 511 in Embodiment 2 of the invention. In addition to the personal-information table T511 (Fig. 4) in Embodiment 1 of the invention, the personal-information table T512 stores a record R5125. In the record R5125, a value is not stored in fields of a name (F5121) and a telephone number (F5122). In the case where the user of an external terminal corresponding to a peripheral-device identifier of "555555EEEE" stored in the record R5125 is not acquainted with the user U1 of the portable telephone terminal 1, but is always at a short distance from the user U1 in a specific life scene (in the embodiment, a life scene where the user is in a vehicle), when information is stored in this way, the portable telephone terminal 1 can specify the life scene of the user U1.

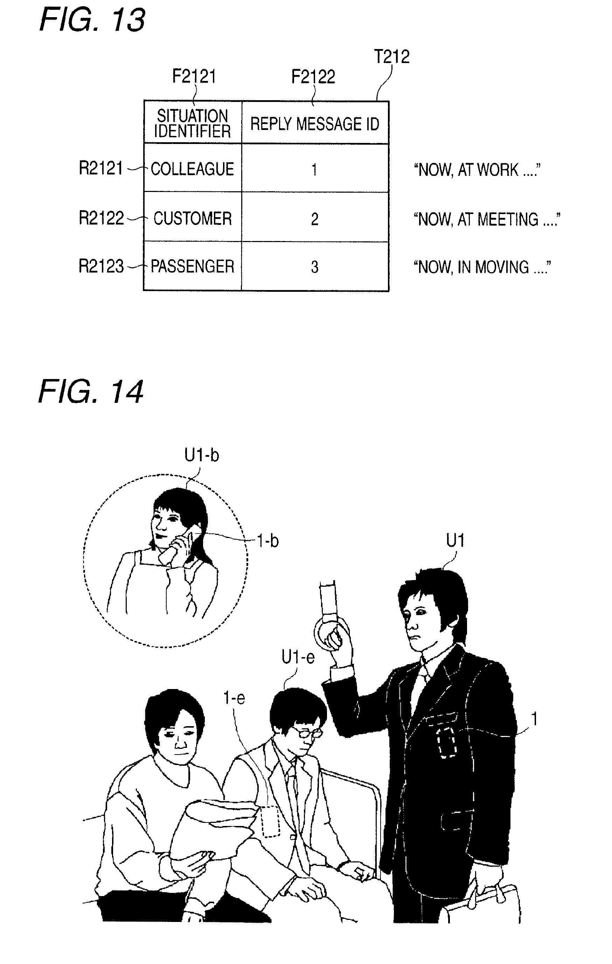

Fig. 12 is a view showing an incoming call operation table T522 which is held by the user information holding means 51 as the user information 511 in Embodiment 2 of the invention. In addition to the incoming call operation table T521 (Fig. 5(a)) in Embodiment 1 of the invention, the incoming call operation table T522 stores a record R5225. Fig. 13 is a view showing a reply message table T212 which is held by the user information holding means 51 in Embodiment 2 of the invention. The reply message table T212 stores a record R2123 in addition to the reply message table T211 (Fig. 6) in Embodiment 1 of the invention.

Fig. 14 is a view illustrating an example of the life scene in which the portable telephone terminal 1 in Embodiment 2 of the invention is used. Fig. 14 shows a fourth situation where, in a fourth life scene in which the user U1 of the portable telephone terminal 1 is moving by train, and a passenger U1-e who is the user of a fifth portable telephone terminal 1-e is at a short distance from the user U 1, the second portable telephone terminal 1-b which is used by Δno Δko U1-b who is a family member originates a call to the first portable telephone terminal 1. Hereinafter, the operation of the portable telephone terminal 1 of Embodiment 2 of the invention will be described with reference to Figs. 2, 3, 5(b), 7, and 11 to 14.

When the first portable telephone terminal 1 detects an incoming call from the second portable telephone terminal 1-b, the communication operation determining means 40 obtains a peripheral-device identifier of "555555EEEE" in step S4004 of the flowchart of Fig. 7. In step S4004, the communication operation determining means 40 obtains a status identifier "Passenger". Furthermore, the communication operation determining means 40 obtains a record R5225 (Fig. 12) in step S4005.

Since the determination in step S4007 is "NO", the communication operation determining means 40 proceeds to step S4008, and, after steps S4008 and S4009, selects the incoming call operation of "Automatic answer". Since the determination of step S4010 is "YES", the communication operation determining means 40 sets "Automatic answer" in step S4011 as the incoming call operation X. After performing the processes of steps S4012 to S4015, the communication operation determining means 40 outputs the communication operation instructions 202 of "Automatic answer, 3".

The communicating means 20 receives the communication operation instructions 202 of "Automatic answer, 1", transmits the reply message of "Now, in moving" to the second portable telephone terminal 1-b which is the calling terminal, and then performs an operation of recording the speech sound of Δno Δko U1-b who is the calling party. In the case where the portable telephone terminal 1-e of the passenger U1-e exists at a short distance from the portable telephone terminal 1, namely, the portable telephone terminal 1 performs automatic answering in response to an incoming call from a family member. The reply message in the case where the portable telephone terminal 1-e of the passenger exists at a short distance from the portable telephone terminal 1 is different from the reply message ("Now, at work") in the second situation of Fig. 9 which has been described in Embodiment 1 of the invention (the case where the portable telephone terminal 1-c of the colleague exists at a short distance from the portable telephone terminal 1).

As described above, even when the portable telephone terminal 1 of Embodiment 2 of the invention receives an incoming call from the family member U1-b, the portable telephone terminal performs different incoming call operations depending on the second life scene in which the user U1 works with the colleague U1-c, and the fourth life scene in which the user U1 is moving together with the passenger U-e.

As apparent from the above description, in the portable telephone terminal of Embodiment 2 of the invention, the configuration in which the communication operation determining means 40 determines the operation of the communicating means 20 on the basis of the peripheral-device identifier 301 and the calling party identifier 201 allows the communication operation for each calling party to be determined depending on a peripheral device existing at a short distance from the user. Even in the case where the life scene is not restricted to a location, a time, external noises, and a moving velocity, therefore, it is possible to automatically determine the communication operation depending on the life scene.

### (Embodiment 3)

In Embodiment 3 of the invention, an embodiment in which the communicating means 20 determines the communication operation on the basis of a situation priority table which stores priority information of the situation identifier and the calling party attribute, not on the basis of the incoming call operation table or the incoming call individual operation table will be described.

Embodiment 3 of the invention will be described while assuming that the configuration, external view, and personal-information table of the portable telephone terminal 1 are identical with the configuration (Figs. 1 and 2), external view (Fig. 3), and personal-information table (Fig. 4) which are used in the description of Embodiment 1 of the invention. With respect to life scenes, description will be made with using the life scenes (Figs. 8 to 10) which are used in the description of Embodiment 1 of the invention.

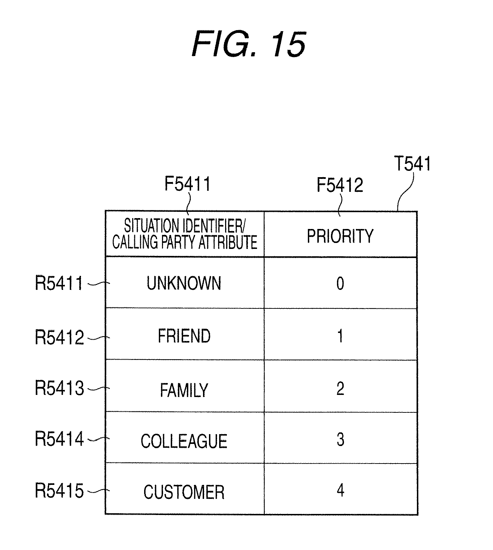

Fig. 15 is a view showing an example of a situation priority table which is held by the user information holding means 51 as the user information 511 in Embodiment 3 of the invention. The situation priority table T541 describes the situation in the case where the portable telephone terminal 1 receives an incoming call, and the priority of the calling party. The situation priority table T541 consists of records R5411 to R5415 for respective items corresponding to the situation identifier or the calling party attribute. Fields F5411, F5412 in each of the records R5411 to R5415 store the item corresponding to the situation identifier or the calling party attribute, and the priority. With respect to the value of the priority of the field F5412, 0 is the lowest priority, and the priority is higher as the value is larger.

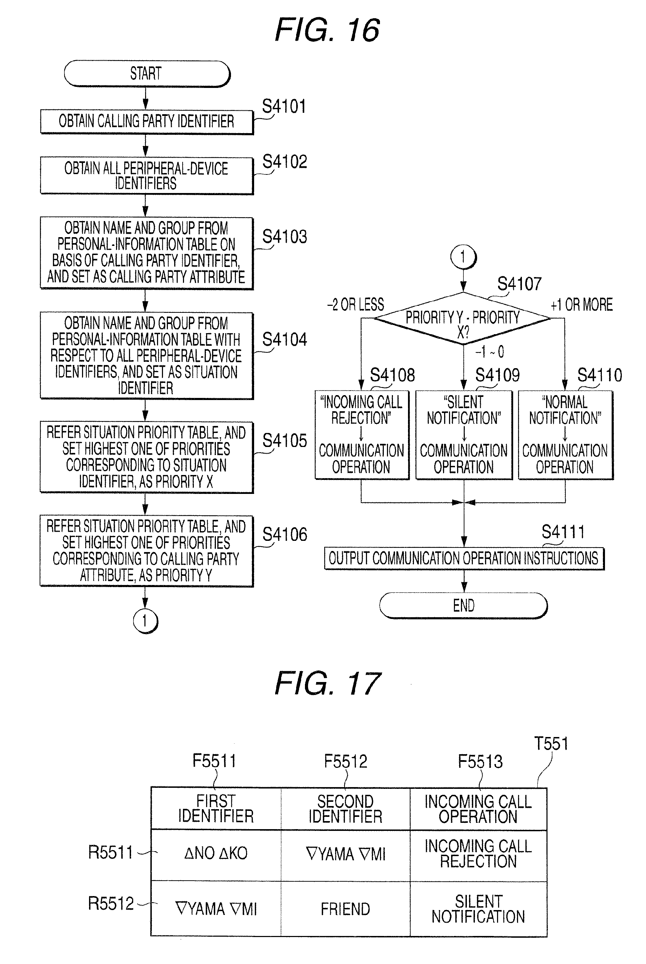

Fig. 16 is a flowchart showing a process procedure of the communication operation determining means 40 in the case where the portable telephone terminal 1 in Embodiment 3 of the invention receives an incoming call. Steps S4101 to S4104 are identical with steps S4001 to S4004 of the flowchart (Fig. 7) in Embodiment 1, and hence their description will be omitted.

In step S4105, the communication operation determining means 40 refers the situation priority table T541, extracts a record in which the priority (F5412) is highest, in the situation priorities (F5411) obtained in step S4104, and sets the value of the priority (F5412) of the record as a priority X. In step S4106, the communication operation determining means 40 refers the situation priority table T541, extracts a record in which the priority (F5412) is highest, in the calling party priorities (F5411) obtained in step S4103, and sets the value of the priority (F5412) of the record as a priority Y.

In step S4107, the communication operation determining means 40 compares the priority X with the priority Y. If the priority Y is higher by 1 or more than the priority X (+1 or more), the process proceeds to step S4110, if the priority Y is equal to or lower by 1 than the priority X (-1 to 0), the process proceeds to step S4109, and, if the priority Y is lower by 2 or more than the priority X (-2 or less), the process proceeds to step S4108. In steps S4108 to S4110, the communication operation determining means 40 selects "Incoming call rejection", "Silent notification", and "Normal notification" as the communication operation, respectively. Namely, the communication operation determining means 40 selects the incoming call operation on the basis of a result of the comparison of the situation priority obtained from the identification result of the peripheral device with the priority of the calling party. In step S4111, the communication operation determining means 40 outputs the communication operation determined by the processes performed in preceding and including step S4110, as the communication operation instructions 202.

Hereinafter, the operation of the portable telephone terminal 1 of Embodiment 3 of the invention will be described with reference to Figs. 2 to 4, 8 to 10, 15, and 16.

First, the operation of the portable telephone terminal 1 in the case of the first situation (Fig. 8) will be described. When the first portable telephone terminal 1 detects an incoming call from the second portable telephone terminal 1-b, the communication operation determining means 40 obtains the calling party attributes of "Δno Δko" and "Family" after steps S4101 to S4104 of the flowchart of Fig. 16. In step S4105, the communication operation determining means 40 sets the priority X to "0" because a situation identifier is not obtained in the process of step S4104. In step S4106, the communication operation determining means 40 refers the situation priority table T541, and sets the priority of "2" (F5412) of the calling party attribute of "Family" (R5413) as the priority Y.

Since the determination of step S4107 is "+1 or more", the communication operation determining means 40 proceeds to step S4110. In step S4110, the communication operation determining means 40 sets "Normal notification" as the communication operation, and, steps S4111, outputs "Normal notification" as the communication operation instructions 202.

The communicating means 20 receives the communication operation instructions 202 of "Normal notification", and notifies of the incoming call in accordance with the default setting of incoming call notification.

In the case of the second situation (Fig. 9), the communication operation determining means 40 obtains in step S4104 situation identifiers of "Vyama Vmi" and "Colleague". In step S4105, the communication operation determining means 40 sets "3" which is the value of the field F5412 of the record R5414 of the situation priority table T541, as the priority X. In accordance with the determination of step S4107, the communication operation determining means 40 proceeds to "-1 to 0", and hence outputs "Silent notification" which is selected in step S4109, as the communication operation instructions 202.

In the case of the third situation (Fig. 10), as a result of the process which is performed in the same manner as the first and second situations, the communication operation determining means 40 outputs "Incoming call rejection" as the communication operation instructions 202.

As described above, even when the portable telephone terminal 1 of Embodiment 3 of the invention receives an incoming call from the family member U1-b, the portable telephone terminal performs different incoming call operations depending on the first life scene in which the user U1 spends alone, the second life scene in which the user U1 works with the colleague U1-c, and the third life scene in which the user U1 has a meeting with the colleague U1-c and the customer U1-d.

As apparent from the above description, in the portable telephone terminal of Embodiment 3 of the invention, the configuration in which the communication operation determining means 40 determines the operation of the communicating means 20 on the basis of the peripheral-device identifier 301 and the calling party identifier 201 allows the communication operation for each calling party to be determined depending on a peripheral device existing at a short distance from the user. Even in the case where the life scene is not restricted to a location, a time, external noises, and a moving velocity, therefore, it is possible to automatically determine the communication operation depending on the life scene.

### (Embodiment 4)

In Embodiment 4 of the invention, an embodiment in which the communicating means 20 determines the communication operation on the basis of a co-occurrence regulation table that stores information of co-occurrence relationships between the situation identifier and the calling party attribute will be described.

Embodiment 4 of the invention will be described while assuming that the configuration, external view, and personal-information table of the portable telephone terminal 1 are identical with the configuration (Figs. 1 and 2), external view (Fig. 3), and personal-information table (Fig. 4) which are used in the description of Embodiment 1 of the invention. With respect to life scenes, description will be made with using the life scenes (Figs. 8 and 9) which are used in the description of Embodiment 1 of the invention.

Fig. 17 is a view showing an example of a co-occurrence regulation table which is held by the user information holding means 51 as the user information 511 in Embodiment 4 of the invention. The co-occurrence regulation table T551 describes the manner of regulating an incoming call operation when the portable telephone terminal 1 receives an incoming call from a specific calling party under a specific situation, i.e., when a specific situation and a specific incoming call co-occur. The co-occurrence regulation table T551 consists of records R5511, R5512 for respective combinations (fields F5511, F5512) of first and second identifiers indicating the situation identifier or the calling party attribute. Fields F5513 of the records R5511, R5512 store instructions how to regulate the incoming call operation when the combination occurs. For example, the record R5511 indicates that, in the case where the situation identifier is Δno Δko and an incoming call from the calling party attribute of Vyama Vmi is received, the portable telephone terminal 1 sets the incoming call operation to "Incoming call rejection". Furthermore, the record R5511 indicates that, in the case where the situation identifier is Vyama Vmi and an incoming call from the calling party attribute of Δno Δko is received, the portable telephone terminal 1 sets the incoming call operation to "Incoming call rejection".

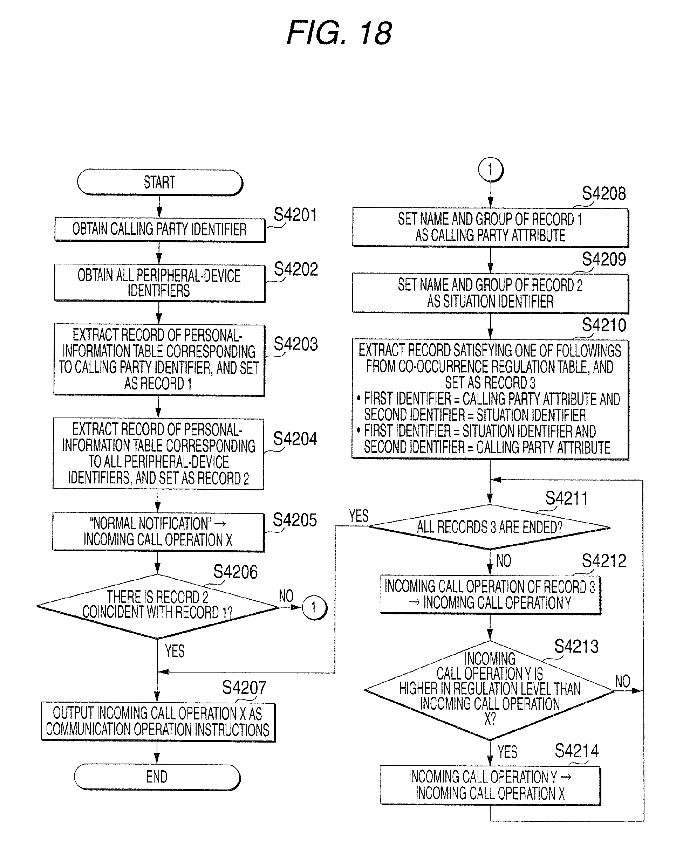

Fig. 18 is a flowchart showing a process procedure of the communication operation determining means 40 in the case where the portable telephone terminal 1 in Embodiment 4 of the invention receives an incoming call. Steps S4201 and S4202 are identical with steps S4001 and S4002 of the flowchart (Fig. 7) in Embodiment 1 of the invention, and hence their description will be omitted.

In steps S4203 and S4204, the communication operation determining means 40 sets the record of the personal-information table T511 (Fig. 4) corresponding to the calling party identifier obtained in step S4201, and that of the personal-information table T511 corresponding to the peripheral-device identifier obtained in step S4202, as a record 1 and a record 2, respectively. In the case where there are plural peripheral-device identifiers obtained in step S4202, all of the corresponding records are selected as the record 2.

In step S4205, the communication operation determining means 40 temporarily sets "Normal notification" as a variable of "Incoming call operation X" indicative of a candidate of the incoming call operation, and then performs processes subsequent to step S4206.

In step S4206, the communication operation determining means 40 determines whether the same record as the record which is extracted as the record 1 is included in the record 2 or not. If the determination is true (YES), the process proceeds to step S4207, and the communication operation determining means 40 outputs the incoming call operation X (= "Normal notification") as the communication operation instructions 202, and ends the process. Namely, the incoming call regulation is not performed on a call originating from an external terminal existing at a short distance from the portable telephone terminal 1, and the incoming call is notified in accordance with the default setting of incoming call notification. The portable telephone terminal 1 operates in this way in order to prevent the calling party existing at a short distance from knowing that an incoming call operation is regulated in the portable telephone terminal 1.

If the determination in step S4206 is "NO", the communication operation determining means 40 proceeds to the process of step S4208. In steps S4208 and S4209, the communication operation determining means 40 obtains the calling party attribute from the name (F5111) and group (F5114) of the record 1, and the situation identifier from the name (F5111) and group (F5114) of the record 2.

In step S4210, the communication operation determining means 40 extracts a record which describes information of regulation in the case where the calling party attribute obtained in step S4208, and the situation identifier obtained inn step S4209 co-occur, from the records of the co-occurrence regulation table T551, and sets the record as a record 3.

Step S4211 is a branch where it is determined whether the processes of steps S4212 to S4214 have been completed on all of records of the record 3 extracted in step S4210 or not. If the communication operation determining means 40 has completed the processes of steps S4212 to S4214 on all of the records (YES), the process proceeds to step S4207.

In step S4212, the communication operation determining means 40 sets the value of the incoming call operation field (F5513) of the record 3, as the incoming call operation Y. In step S4213, the communication operation determining means 40 determines whether the level of regulation of the incoming call operation Y is higher than that of the incoming call operation X or not. If the determination result is "YES", the value of the incoming call operation Y is set as the new incoming call operation X. Namely, the communication operation determining means 40 repeatedly performs the processes of steps S4212 to S4214, thereby selecting the incoming call operation of the highest level of regulation from the record 3 to set it as the incoming call operation X. In step S4207, the incoming call operation is output as the communication operation instructions 202.

Hereinafter, the operation of the portable telephone terminal 1 of Embodiment 4 of the invention will be described with reference to Figs. 2 to 4, 8, 9, 17, and 18.

First, the operation of the portable telephone terminal 1 in the case of the first situation (Fig. 8) will be described. When the first portable telephone terminal 1 detects an incoming call from the second portable telephone terminal 1-b, the communication operation determining means 40 obtains the calling party identifier of "09022222222" after the processes of steps S4201 and S4202 of the flowchart of Fig. 18. In step S4203, the communication operation determining means 40 obtains the record R5112 (Fig. 4) as the record 1, but, in step S4204, does not obtain a record corresponding to the record 2. Therefore, the determination of step S4206 is "NO", and the communication operation determining means 40 proceeds to the process of step S4208.

In step S4208, the communication operation determining means 40 obtains the calling party attributes of "Δno Δko" and "Family", but, in step S4209, does not obtain a situation identifier. Therefore, the record 3 which satisfies the conditions of step S4210 is not obtained, and, in determination of step S4211, the communication operation determining means 40 therefore proceeds to "YES", and outputs in step S4207 the incoming call operation X of "Normal notification" which is set in step S4205, as the communication operation instructions 202.

The communicating means 20 receives the communication operation instructions 202 of "Normal notification", and notifies of the incoming call in accordance with the default setting of incoming call notification.

In the case of the second situation (Fig. 9), the communication operation determining means 40 obtains in step S4202 the peripheral-device identifier of "333333CCCC", and hence, in step S4204, extracts the record R5113 (Fig. 4) and sets it as the record 2. Since the determination in step S4206 is "NO", the communication operation determining means 40 proceeds to the process of step S4208, and, in steps S4208 and S4209, obtains the calling party attributes of "Δno Δko" and "Family", and the situation identifiers of "Vyama Vmi" and "Colleague".

In step S4210, the communication operation determining means 40 extracts the record R5511 (Fig. 17) which satisfies the conditions, and sets it as the record 3. Since the determination in step S4211 is "NO", the communication operation determining means 40 proceeds to the process of step S4212, and sets the value "Incoming call rejection" of the incoming call operation field (F5513) of the record R5511, as the incoming call operation Y. In the determination of step S4213, the level of the regulation of the value "Incoming call rejection" of the incoming call operation Y is higher (YES) than that of the value "Normal notification" of the incoming call operation X, and therefore in step S4214 the communication operation determining means 40 newly sets "Incoming call rejection" as the value of the incoming call operation X. Since the record 3 contains only R5511, the communication operation determining means 40 proceeds from step S4211 to step S4207 to output "Incoming call rejection" which is the value of the incoming call operation X, as the communication operation instructions 202.

The communicating means 20 receives the communication operation instructions 202 of "Incoming call rejection", and returns the busy signal to the calling side without performing the incoming call operation.

As described above, even when the portable telephone terminal 1 of Embodiment 4 of the invention receives an incoming call from the family member U1-b, the portable telephone terminal performs different incoming call operations depending on the first life scene in which the user U1 spends alone, and the second life scene in which the user U1 works with the colleague U1-c.

As apparent from the above description, in the portable telephone terminal 1 of Embodiment 4 of the invention, the configuration in which the communication operation determining means 40 determines the operation of the communicating means 20 on the basis of the peripheral-device identifier 301 and the calling party identifier 201 allows the communication operation for each calling party to be determined depending on a peripheral device existing at a short distance from the user. Even in the case where the life scene is not restricted to a location, a time, external noises, and a moving velocity, therefore, it is possible to automatically determine the communication operation depending on the life scene.

### (Embodiment 5)

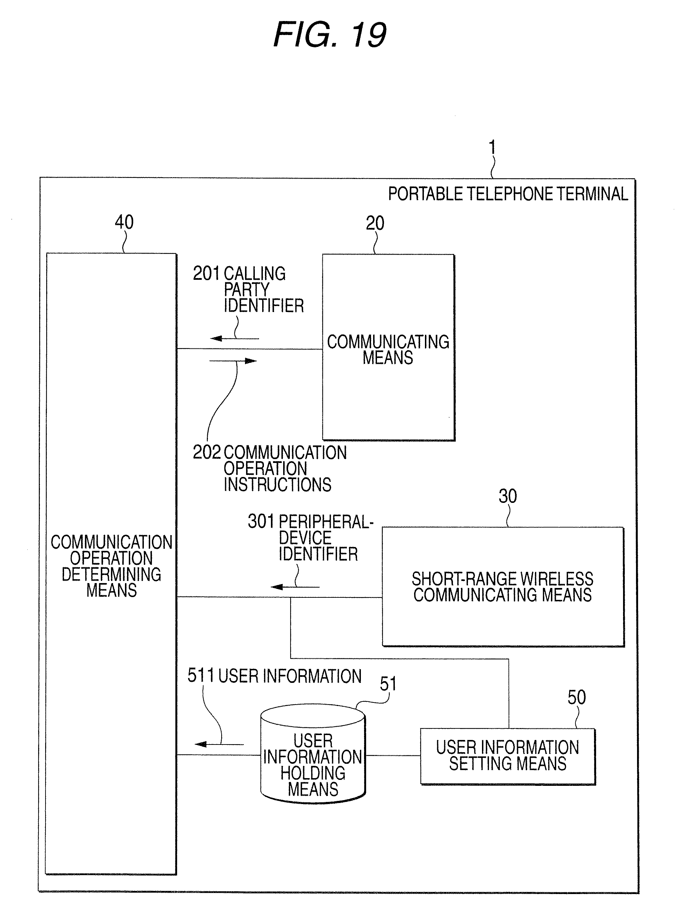

Fig. 19 is a schematic diagram of the portable telephone terminal 1 of Embodiment 5 of the invention. Referring to Fig. 19, the portable telephone terminal 1 comprises the user information holding means 51, and user information setting means 50.

The user information holding means 51 holds the user information 511 which is to be referred by the communication operation determining means 40 in order to determine the communication operation. The user information setting means 50 is means for setting the user information 511 to be held by the user information holding means 51. The user information setting means 50 receives the peripheral-device identifier 301 output from the short-range wireless communicating means 30, and sets the user information 511.

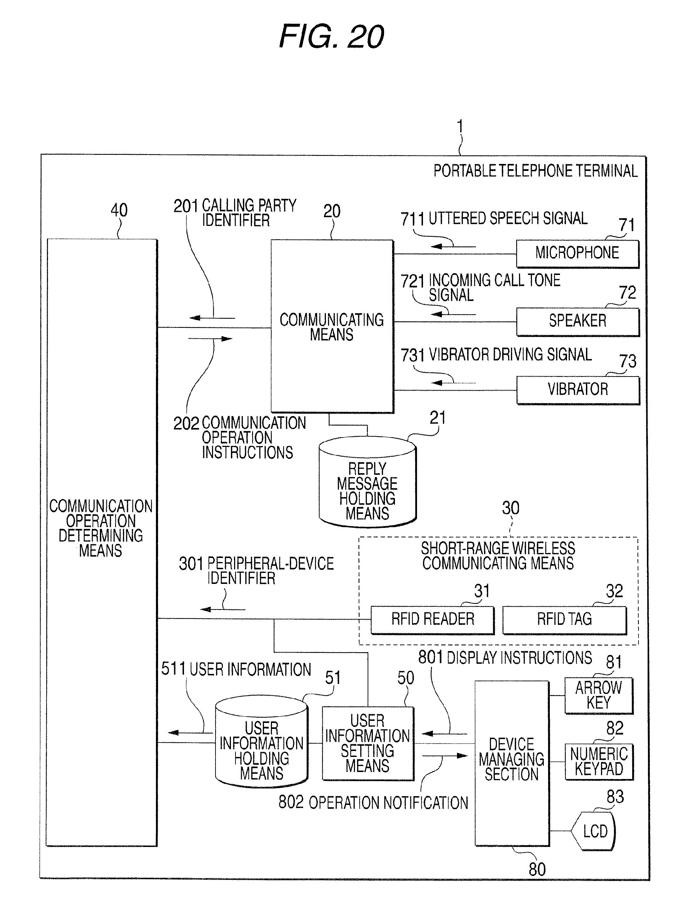

Fig. 20 is a diagram showing in further detail the portable telephone terminal 1 of Embodiment 5 of the invention. Referring to Fig. 20, the portable telephone terminal 1 comprises a device managing section 80, an arrow key 81, a numeric keypad 82, and an LCD 83.

The device managing section 80 is a section which manages the arrow key 81, the numeric keypad 82, and the LCD 83, receives display instructions 801 instructing a display of a menu, an item, and the like, and outputs display contents to the LCD 83. The device managing section 80 outputs contents of operation inputs accepted by the arrow key 81 and the numeric keypad 82, as operation notification 802. The device managing section 80 is configured by a memory device (not shown) such as a VRAM, a device driver, window display software, and kana-kanji conversion front-end processor which operate on a CPU (not shown), etc.

The arrow key 81 accepts an operation input through a depression on an upper, lower, right, left, or middle portion, and notifies of contents of the operation input to the device managing section 80. The numeric keypad 82 accepts a depressing operation input conducted by the user, and notifies of contents of the operation input to the device managing section 80. The LCD 83 displays information in accordance with instructions of the device managing section 80. The arrow key 81 and the numeric keypad 82 correspond to the operation inputting device set forth in the claims, and the LCD 83 corresponds to the display device set forth in the claims.

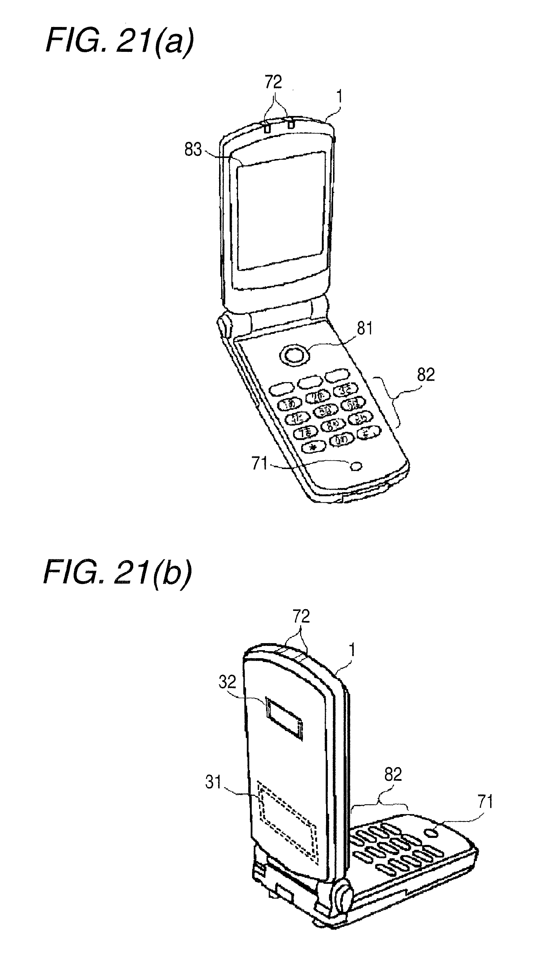

Fig. 21 is an external view of the portable telephone terminal 1 of Embodiment 5 of the invention. Fig. 21 (a) is an external view of the portable telephone terminal 1 as viewed from the direction of an opened portion, and Fig. 21 (b) is an external view of the portable telephone terminal 1 as viewed from the direction of the rear side of the opened portion. Referring to Fig. 21, the portable telephone terminal 1 comprises the arrow key 81, the numeric keypad 82, and the LCD 83 on the surface of the case.

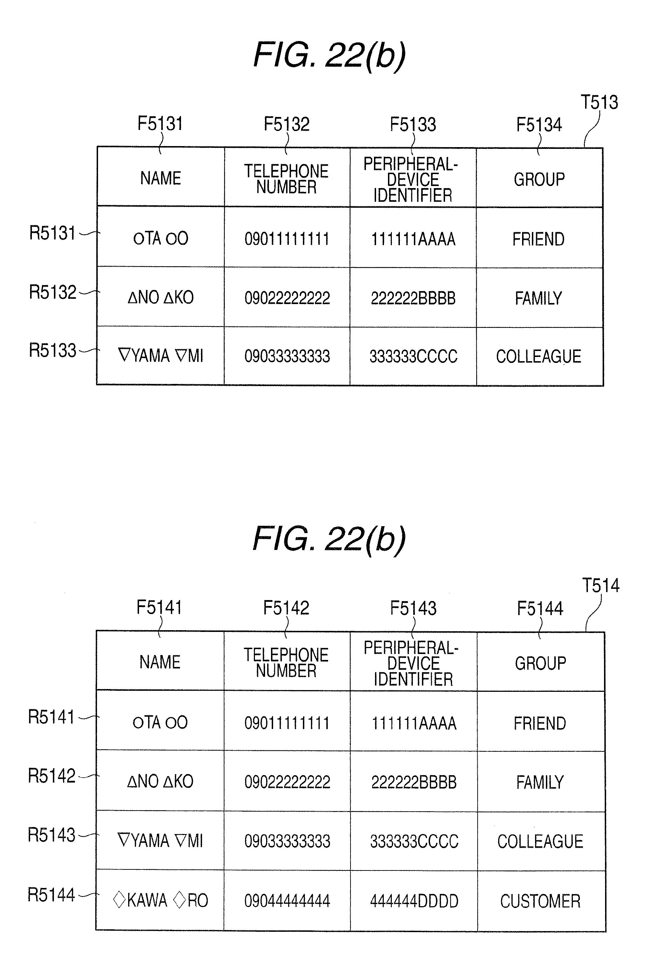

Fig. 22 is a view showing an example of a personal-information table which is held by the user information holding means 51, as the user information 511 in Embodiment 5 of the invention.

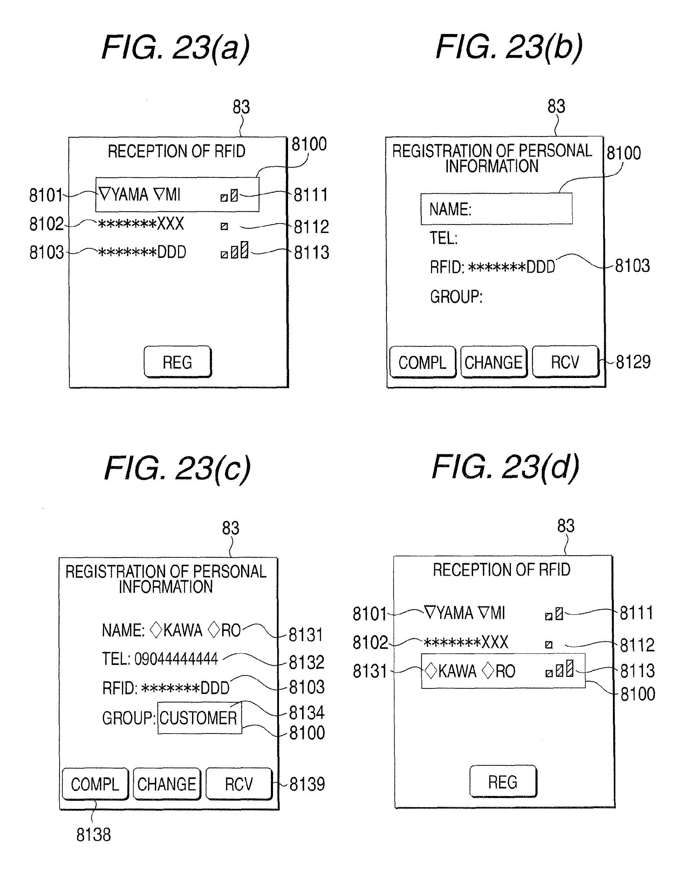

Fig. 23 is a view illustrating display examples of the LCD 83 in the case where personal information is set with using the portable telephone terminal 1 in Embodiment 5 of the invention. Hereinafter, with reference to Figs. 20 to 23, among operations of the portable telephone terminal 1 in the case where the user information 511 in Embodiment 5 of the invention is set, an operation of setting the personal-information table will be described. The following description will be made while assuming that the personal-information table T513 shown in Fig. 22(a) is in an initial state of the personal-information table.

Fig. 23(a) is a screen which displays a communication state of the RFID reader 31. This screen is displayed by the LCD 83 as a result of an operation in which the user information setting means 50 accepts the peripheral-device identifier 301, and outputs the display instructions 801 to the device managing section 80. In Fig. 23(a), the display of the LCD 83 shows by means of items 8101 to 8103 that three peripheral devices exist at a short distance from the portable telephone terminal 1. Furthermore, the LCD 83 displays marks 8111 to 8113 indicating the signal strengths for the respective items 8101 to 8103. The marks 8111 to 8113 indicate the signal strengths in communications which are conducted between RFID tags disposed in the three peripheral devices and the RFID reader 31. The mark 8113 consisting of three bars indicates the highest signal strength, and the mark 8112 consisting of one bar indicates the lowest signal strength. A frame 8100 which is displayed in the periphery of an item indicates that a focus is on the item. In the three items 8101 to 8103, the peripheral-device identifier of "333333CCCC" of the first peripheral device is already registered in a record R5133 of the personal-information table T513, and hence the user information setting means 50 gives the display instructions 801 to the device managing section 80 so as to display "Vyama Vmi" which is the value of a name field F5131 of the record R5133 obtained from the table T513. In the displays 8102, 8103 of the peripheral-device identifier, the first six characters of the ten characters indicating the peripheral-device identifier are replaced with asterisks (" * ") showing undisplayed letters. The undisplayed letters are used in order that the secrecy is enhanced by hiding a part of an identifier of a peripheral device as compared with the case where the whole of an identifier is disclosed.

Referring to the screen display of Fig. 23(a), when the user operates the arrow key 81, the identifier of a peripheral device which is to be newly registered can be selected. The user downward operates the arrow key 81 two times to set a state where the focus 8100 is on the item 8103 corresponding to the third peripheral device, and the middle of the arrow key 81 is depressed. Then, the device managing section 80 outputs the contents of the operation inputs as the operation notification 802. The user information setting means 50 accepts the notification, selects the item 8103, and outputs the display instructions 801 to the device managing section 80 so as to transfer the display of the LCD 83 to the registration screen of Fig. 23(b).

Fig. 23(b) is a screen for registering the peripheral-device identifier selected in Fig. 23(a). The peripheral-device identifier 8103 selected in Fig. 23(a) is displayed on the screen, and the focus 8100 which prompts the user to input information is displayed. In the screen of Fig. 23(b), when user operates the arrow key 81 and the numeric keypad 82, the name, telephone number, and group which are information to be registered into the personal-information table T513 can be input. Items of "Name", "Tel", and "Group" displayed on the screen correspond to fields of "Name" (F5131), "Telephone number" (F5132), and "Group" (F5134) of the personal-information table T513, respectively.

The display 8129 of "Rcv" in the lower right of the screen of Fig. 23(b) indicates that, when the user rightward operates the arrow key 81, the screen display is returned to that of Fig. 23(a). When the screen display is returned to that of Fig. 23(a) as a result of a rightward operation of the arrow key 81, the user information setting means 50 obtains the latest communication state of the RFID 31 from the RFID reader 31, and instructs the device managing section 80 to again display the LCD 83.

Fig. 23(c) is a screen in which the information input in the screen of Fig. 23(b) has been completed. In the column of "Name", "◇kawa ◇ro" (8131) which is the name of the user of the third peripheral device is input. In the column of "Tel", the telephone number of "0904444444" (8132) of the third peripheral device is input. In the column of "Group", the group of "Customer" (8134) to which the user of the third peripheral device belongs is input. In this state, when the user leftward operates the arrow key 81 in accordance with the display 8138 of "Comp" in the lower left of the screen, the user information setting means 50 registers the input information into the personal-information table T513. Fig. 22(b) shows the contents of a personal-information table T514 which is obtained as a result of the registration. A new record R5144 which is produced on the basis of the information input by the user is added to the personal-information table T514.

The leftward operation of the arrow key 81 causes the display of the LCD 83 to be transferred to a communication state screen (Fig. 23(d)). In Fig. 23(d), "◇kawa ◇ro" which is registered at this time, and which is the name of the user of the third peripheral device is displayed at the display position 8131 of the peripheral-device identifier of the third peripheral device.

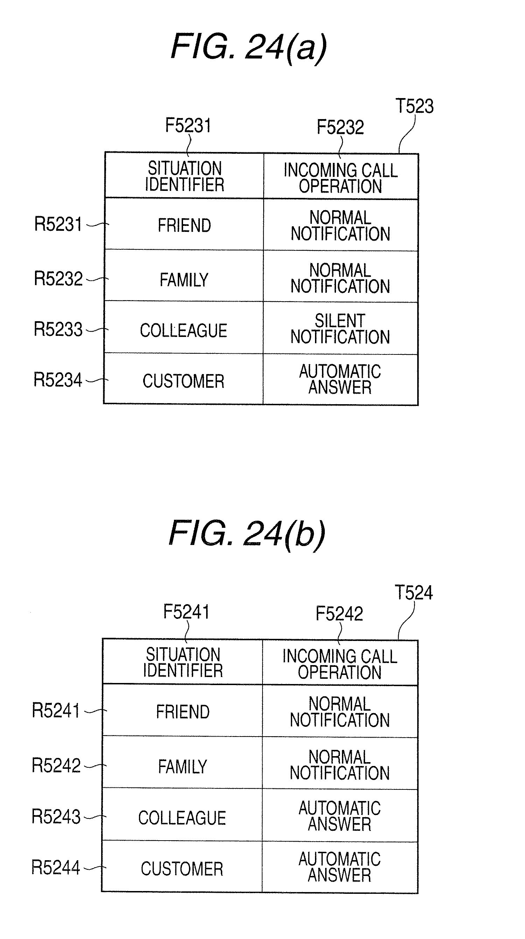

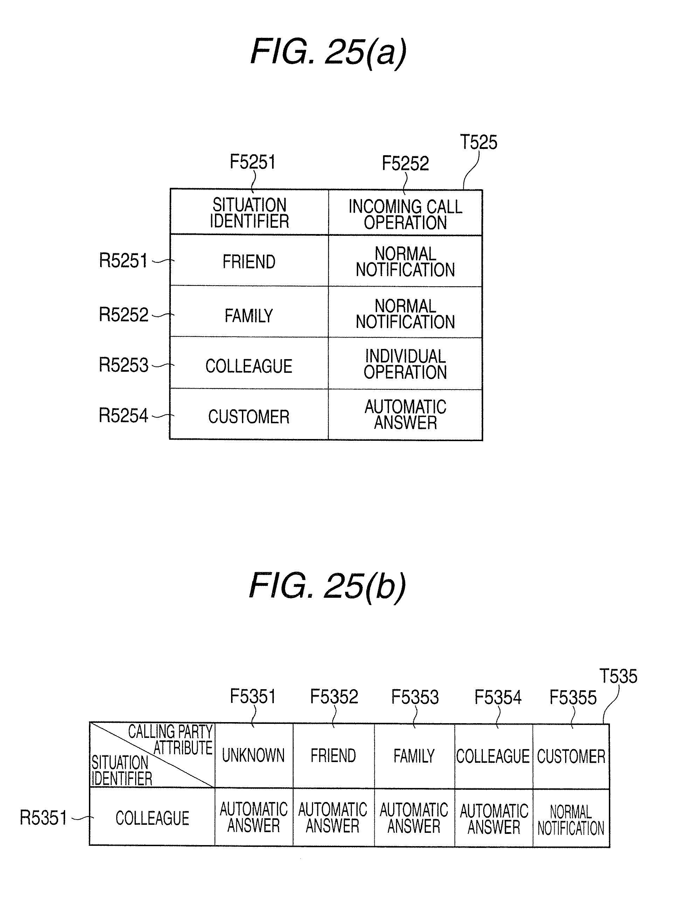

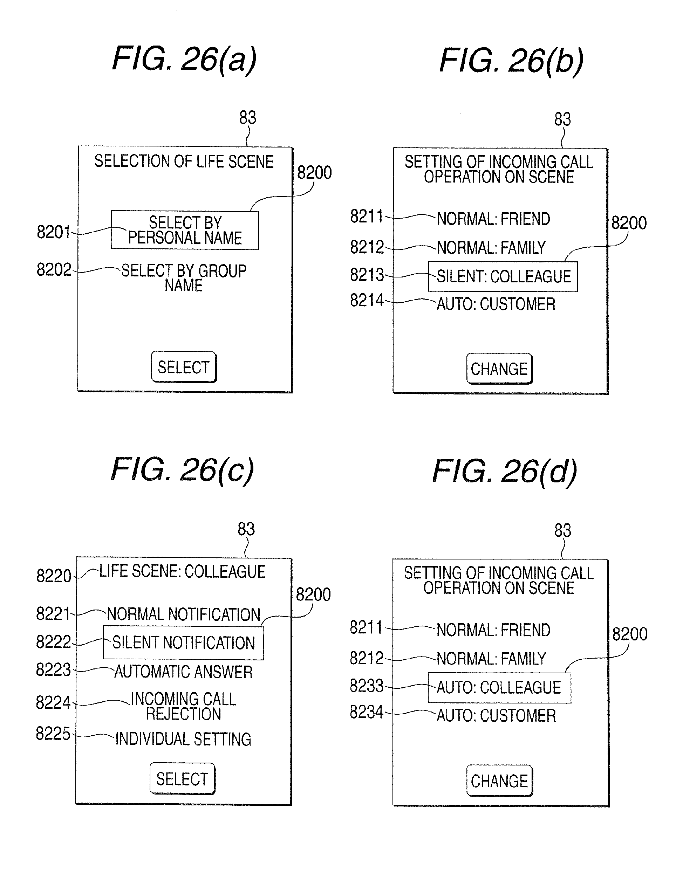

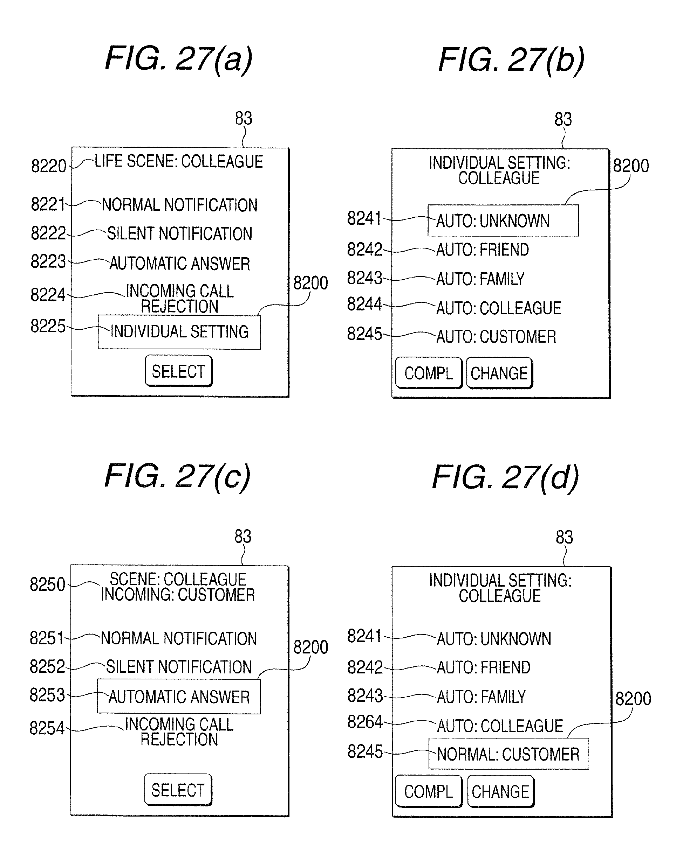

Figs. 24 and 25 are views showing examples of the incoming call operation table and incoming call individual operation table which are held as the user information 511 in Embodiment 5 of the invention by the user information holding means 51. Figs. 26 and 27 are views illustrating display examples of the LCD 83 in the case where the incoming call operation is set with using the portable telephone terminal 1 in Embodiment 5 of the invention. Hereinafter, with reference to Figs. 20 to 22, and 24 to 27, among operations of the portable telephone terminal 1 in the case where the user information 511 in Embodiment 5 of the invention is set, operations of setting the incoming call operation table and the incoming call individual operation table will be described. The following description will be made while assuming that an incoming call operation table T523 shown in Fig. 24(a) is in an initial state of the incoming call operation table. The following description will be made while assuming that nothing is set in the incoming call operation table in the initial state.

Fig. 26(a) shows a screen for selecting a life scene in setting of the incoming call operation table. The screen is displayed on the LCD 83 by issuing the display instructions 801 from the user information setting means 50 to the device managing section 80. In Fig. 26(a), "Select by personal name" (8201) indicates an alternative in which the incoming call operation is set for each value of a name field F5141 of the personal-information table T514 (Fig. 22(b)), and "Select by group name" (8202) indicates an alternative in which the incoming call operation is set for each value of a group field F5144 of the personal-information table T514. When the user vertically operates the arrow key 81, a focus 8200 can be moved among alternatives, and, when the middle of the arrow key 81 is depressed, the alternative on which the focus 8200 exists can be selected. The user downward operates the arrow key 81 one time to set a state where the focus 8200 exists on the alternative 8202, and the middle of the arrow key 81 is depressed. Then, the display on the LCD 83 is transferred to the screen of Fig. 26(b).

Fig. 26(b) shows a screen for setting an incoming call operation for each life scene. The LCD 83 displays group names as life scenes, and the current setting of the incoming call operation for each group name. In the figure, "Normal", "Silent", and "Auto" indicate the incoming call operations of "Normal notification", "Silent notification", and "Automatic answer", respectively.

The user information setting means 50 refers the value of the group field F5144 of the personal-information table T514, and an incoming call operation field F5232 in which the value coincides with a situation identifier F5231 of the incoming call operation table T523 (Fig. 24(a)), whereby items 8211 to 8214 are produced. For example, "Normal: Friend" of the item 8211 is produced from the value "Friend" of the field F5144 of a record R5141 of the personal-information table T514, and the value "Normal notification" of the field F5232 of a record R5231 of the incoming call operation table T523 in which the value "Friend" is set as the situation identifier (F5231). In the case where a record of the incoming call operation table T523 which coincides with the value of the group field F5144 stored in the personal-information table T514 does not exist, i.e., the incoming call operation of the group has not yet been set, the user information setting means 50 outputs the display instructions 801 to the device managing section 80 so as to display "Normal" as the incoming call operation.

In the state of Fig. 26(b), the user downward operates the arrow key 81 two times to set a state where the focus 8200 is on the item 8213, and the middle of the arrow key 81 is depressed. Then, the display of the LCD 83 is transferred to the screen of Fig. 26(c).

Fig. 26(c) shows a screen for selecting the incoming call operation in the life scene of "Colleague" (8220) selected in Fig. 26(b). In Fig. 26(c), the LCD 83 displays selectable items 8221 to 8225 of the incoming call operation. In the incoming call operation table T523, the value of the field F5232 of the record R5233 corresponding to the situation identifier (F5231) of "Colleague" is "Silent notification". Therefore, the user information setting means 50 instructs the device managing section 8 to display the focus 8200 on the item of "Silent notification" (8222).

In the state of Fig. 26(c), the user downward operates the arrow key 81 one time to set a state where the focus 8200 is on the item 8223, and the middle of the arrow key 81 is depressed. Then, the user information setting means 50 registers the selected result into the incoming call operation table T523. Fig. 24(b) shows the contents of an incoming call operation table T524 which shows a result of the registration. The value of an incoming call operation field F5242 of a record R5243 corresponding to the situation identifier (F5241) of "Colleague" of the incoming call operation table T524 is changed to "Automatic answer".

The depressing operation of the arrow key 81 causes the display of the LCD 83 to be transferred to an incoming call operation selecting screen (Fig. 26(d)). In Fig. 26(d), "Auto" indicating "Automatic answer" which is selected at this time is displayed as the incoming call operation of the item 8233.

In the screen shown in Fig. 26(d), the user depresses the middle of the arrow key 81, and downward operates the arrow key 81 two times. Then, the display of the LCD 83 is transferred to a state where the focus 8200 is on the item of "Individual setting" as shown in Fig. 27(a). When the user depresses the middle of the arrow key 81 in this state, the display of the LCD 83 is transferred to a setting screen of Fig. 27(b) in which the incoming call operation in the life scene of "Colleague" is individually set.

In Fig. 27(b), items 8241 to 8245 indicate individual incoming call operations for respective calling party attributes (the name, the group, or "Unknown") in the life scene of "Colleague". When the user information setting means 50 extracts the values of the name field F5141 and group field (F5144) of the personal-information table T514, i.e., individual incoming call operations for respective calling party attributes from the incoming call individual operation table, and instructs the device managing section 80 to display the values, the LCD 83 displays the screen of Fig. 27(b). In the case where an individual incoming call operation has not yet been set in the incoming call individual operation table, the user information setting means 50 instructs the device managing section 80 to display the value of the incoming call operation field of the incoming call operation table in place of an individual incoming call operation. In the stage of Fig. 27(b), information of the individual incoming call operation in the life scene of "Colleague" is not stored in the incoming call individual operation table. Therefore, the user information setting means 50 instructs the device managing section 80 to display the value "Automatic answer" of the incoming call operation field F5242 of the record R5243 in which the situation identifier F5241 of the incoming call operation table T524 coincides with "Colleague", in the items 8241 to 8245.

In the state of Fig. 27(b), the user downward operates the arrow key 81 four times to set a state where the focus 8200 is on the item 8245, and the middle of the arrow key 81 is depressed. Then, the display of the LCD 83 is transferred to the screen of Fig. 27(c).

Fig. 27(c) shows a screen for selecting the individual incoming call operation corresponding to the calling party attribute of "Customer" (8245) selected in Fig. 27(b). In Fig. 27(c), the LCD 83 displays selectable items 8251 to 8254 of the incoming call operation. In the incoming call operation table T524, the value of the field F5242 of the record R5243 corresponding to the situation identifier (F5241) of "Colleague" is "Automatic answer". Therefore, the user information setting means 50 instructs the device managing section 80 to display the focus 8200 on the item of "Automatic answer" (8253).

In the state of Fig. 27(c), the user upward operates the arrow key 81 two times to set a state where the focus 8200 is on the item 8251, and the middle of the arrow key 81 is depressed. Then, the display of the LCD 83 is transferred to the setting screen of Fig. 27(d) in which the incoming call operation in the life scene of "Colleague" is individually set. In Fig. 27(d), "Normal" indicating "Normal notification" which is selected at this time is displayed as the incoming call operation of the item 8245.

When the user leftward operates the arrow key 81 in Fig. 27(d), the user information setting means 50 registers the results of the selections in Figs. 27(a) to 27(d), into the incoming call operation table T524. Fig. 25(a) shows the contents of an incoming call operation table T525 which is obtained as a result of the registration. The value of an incoming call operation field F5252 of a record R5253 corresponding to a situation identifier (F5251) of "Colleague" of the incoming call operation table T525 is changed to "Individual notification". Fig. 25(b) shows the contents of an incoming call individual operation table T535 which is newly set. In the incoming call individual operation table T535, the value of a field of "Customer" (F5355) of a record R5351 corresponding to the situation identifier of "Colleague" is "Normal notification", and the values of the other fields (F5351 to F5354) are "Automatic answer".

As apparent from the above description, in the portable telephone terminal 1 of Embodiment 5 of the invention, the configuration comprising the user information setting means 50 for setting the user information 511 enables the user to set the correspondence between a peripheral device existing at a short distance from the user and the situation of the user, or that between the situation of the user and the calling party. Even in the case where the life scene is not restricted to a location, a time, external noises, and a moving velocity, therefore, it is possible to automatically determine the communication operation depending on the life scene for each user.

### (Embodiment 6)

In Embodiment 6 of the invention, an example in which a co-occurrence regulation table is used in place of the incoming call operation table and the incoming call individual operation table will be described. It is assumed that the portable telephone terminal 1 of Embodiment 6 of the invention is configured as shown in Figs. 19 and 20, the appearance of the portable telephone terminal 1 of Embodiment 6 of the invention is as shown in Fig. 21, and the personal-information table in Embodiment 6 of the invention is the personal-information table T511 shown in Fig. 4.

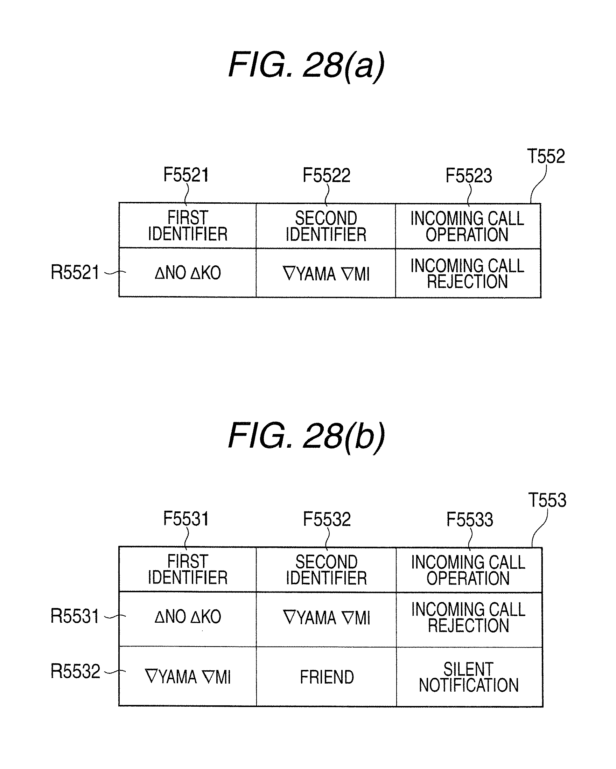

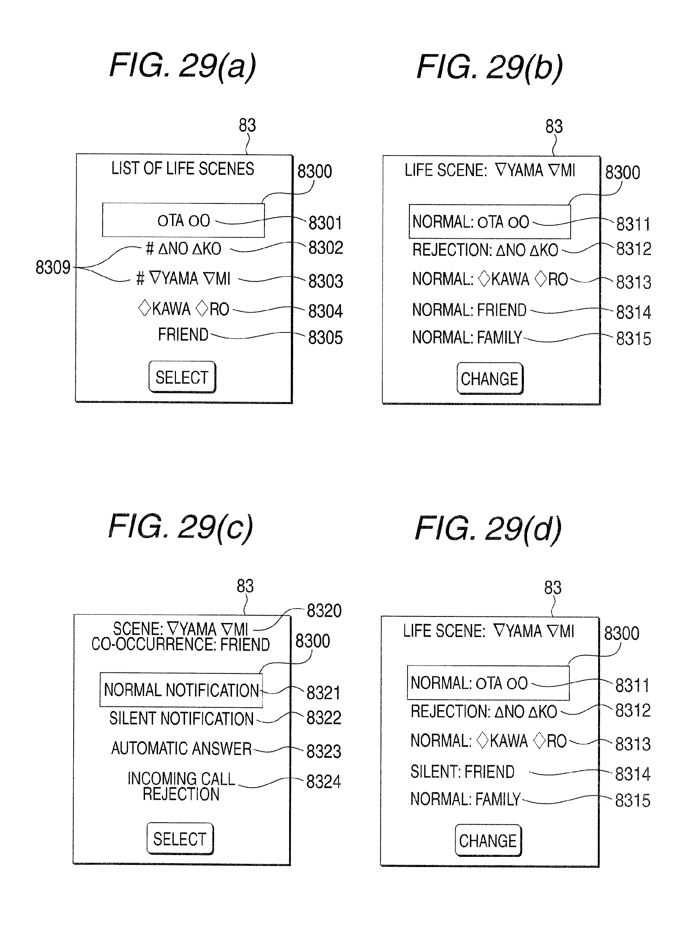

Fig. 28 is a view showing examples of a co-occurrence regulation table which is held by the user information holding means 51 as the user information 511 in Embodiment 6 of the invention. Fig. 29 is a view illustrating display examples of the LCD 83 in the case where an incoming call operation is set with using the portable telephone terminal 1 in Embodiment 6 of the invention. Hereinafter, with reference to Figs. 4, 19 to 21, 28, and 29, among operations of the portable telephone terminal 1 in the case where the user information 511 1 in Embodiment 6 of the invention is set, an operation of setting the co-occurrence regulation table will be described. The following description will be made while assuming that a co-occurrence regulation table T552 shown in Fig. 28(a) is in an initial state of the co-occurrence regulation table.

Fig. 29(a) shows a screen for selecting a life scene in setting of the co-occurrence regulation table. The screen is displayed on the LCD 83 by issuing the display instructions 801 from the user information setting means 50 to the device managing section 80. In Fig. 29(a), as items 8301 to 8305 corresponding to a life scene, the LCD 83 displays the values of the name field F5111 and group field F5114 of the records of the personal-information table T511 (Fig. 4), i.e., the situation identifier or the calling party attribute.

The marks "#" (8309) shown on the left side of the items of "Δno Δko" (8302) and "Vyama Vmi" (8303) indicate that regulation of an incoming call operation is set on the corresponding situation identifier or calling party attribute. The user information setting means 50 instructs the device managing section 80 to display the marks "#" (8309) on the basis that a regulating operation of "Incoming call rejection" (F5523) in the case where the identifiers of "Δno Δko" (F5521) and "Vyama Vmi" (F5552) co-occur is stored in a record R5521 of the co-occurrence regulation table T552, whereby the marks 8309 are displayed on the LCD 83.

In Fig. 29(a), the user downward operates the arrow key 81 two times to set a state where a focus 8300 is on the item 8303, and the middle of the arrow key 81 is depressed. Then, the display of the LCD 83 is transferred to the screen of Fig. 29(b).

Fig. 29(b) shows a screen for setting an incoming call operation in the case of co-occurrence for each of identifiers which may co-occur with the identifier of "Vyama Vmi" (8303) selected by the operation of the arrow key 81, i.e., situation identifiers or calling party attributes. In the setting screen of Fig. 29(b), the contents of the current setting are listed, so that, when the user selects an item in the list, the setting of the incoming call operation for each identifier can be changed. In Fig. 29(b), the incoming call operations of "Normal notification", "Silent notification", "Automatic answer", and "Incoming call rejection" are displayed by character strings of "Normal", "Silent", "Auto", and "Call", respectively. Since the incoming call operation of "Incoming call rejection" in the case where "Δno Δko" and "Vyama Vmi" co-occur is already stored in the record R5521 of the co-occurrence regulation table T552, "Reject" is displayed in the item 8312. "Normal" is displayed in the incoming call operation columns of the identifiers 8311, 8313 to 8315 in which the incoming call operation is not regulated.

In Fig. 29(b), the user downward operates the arrow key 81 three times to set a state where the focus 8300 is on the item 8314, and the middle of the arrow key 81 is depressed to select the identifier of "Friend" (8314). Then, the display of the LCD 83 is transferred to the screen of Fig. 29(c).

Fig. 29(c) shows a screen for setting an incoming call operation in the case of co-occurrence of the identifier of "Vyama Vmi" (8303) selected in Fig. 29(a) and the identifier of "Friend" (8314) selected in Fig. 29(b). In Fig. 29(c), the LCD 83 displays selectable items 8321 to 8324 of the incoming call operation. Since information of the incoming call operation in the case where the identifiers of "Vyama Vmi" (8303) and "Friend" (8314) co-occur is not stored in the co-occurrence regulation table T552, the user information setting means 50 instructs the device managing section 8 to display the focus 8300 on the item of "Normal notification" (8321).

In Fig. 29(c), the user downward operates the arrow key 81 one time to set a state where the focus 8300 is on the item 8322, and the middle of the arrow key 81 is depressed. Then, the user information setting means 50 registers the selected result into the co-occurrence regulation table T552. Fig. 28(b) shows the contents of a co-occurrence regulation table T553 which shows a result of the registration. A record R5532 is newly added to the co-occurrence regulation table T553. The incoming call operation of "Silent notification" (F5533) in the case where the first identifier of "Vyama Vmi" (F5531) and the second identifier of "Friend"' (F5532) co-occur is stored in the record R5532.

The depressing operation of the arrow key 81 causes the display of the LCD 83 to be transferred to an incoming call operation setting screen (Fig. 29(d)). In Fig. 29(d), "Silent" indicating "Silent notification" which is selected at this time is displayed as the incoming call operation of the item 8334.

As apparent from the above description, in the portable telephone terminal 1 of Embodiment 6 of the invention, the configuration comprising the user information setting means 50 for setting the user information 511 enables the user to set the correspondence between the situation of the user and the calling party. Even in the case where the life scene is not restricted to a location, a time, external noises, and a moving velocity, therefore, it is possible to automatically determine the communication operation depending on the life scene for each user.

### (Embodiment 7)

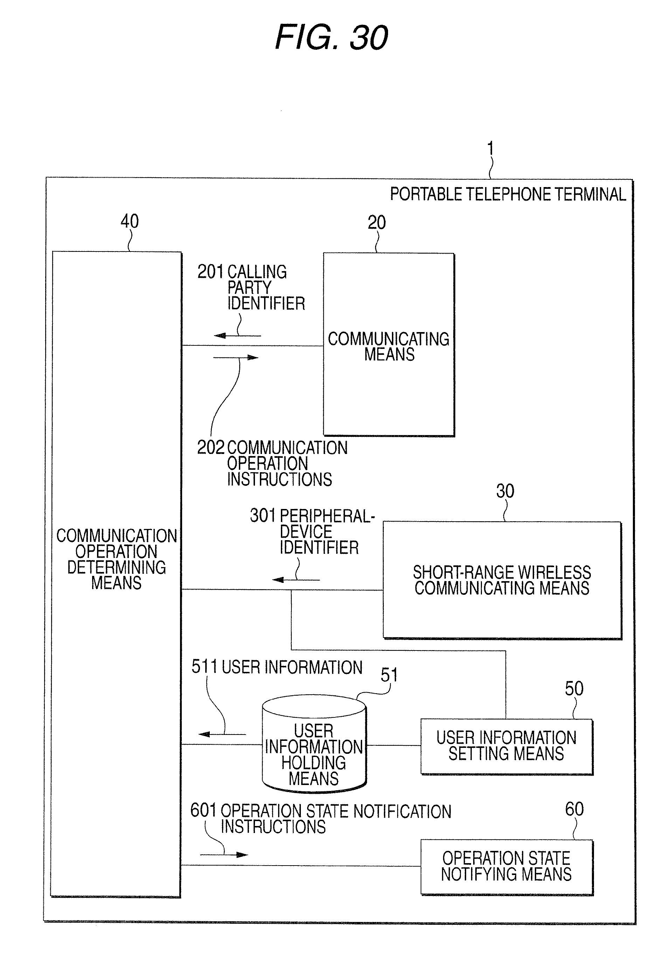

Fig. 30 is a schematic diagram of the portable telephone terminal 1 of Embodiment 7 of the invention. Referring to Fig. 30, the portable telephone terminal 1 comprises operation state notifying means 60. The communication operation determining means 40 is configured so as to output operation state notification instructions 601 which instructs to notify the state of a communication operation determined by the communication operation determining means 40. The operation state notifying means 60 receives the operation state information 601, and notifies of the state of the communication operation.

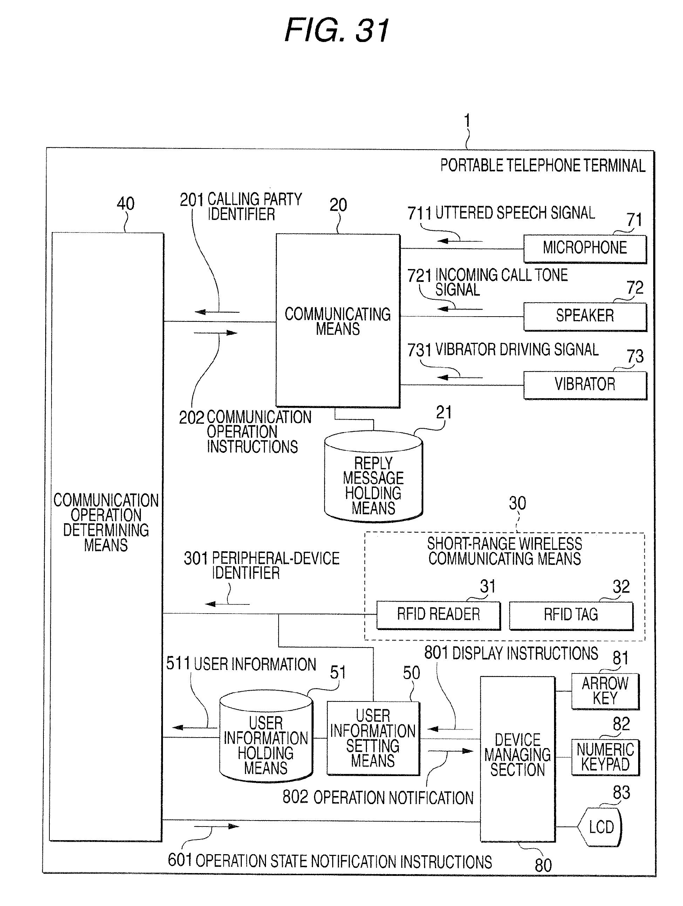

Fig. 31 is a diagram showing in further detail the portable telephone terminal 1 of Embodiment 7 of the invention. Referring to Fig. 31, the communication operation determining means 40 outputs the operation state notification instructions 601 to the device managing section 80. The device managing section 80 outputs to the LCD 83 display contents for displaying the state of the communication operation on the basis of the operation state notification instructions 601. The user information holding means 51 holds the personal-information table T511 (Fig. 4) and the co-occurrence regulation table T552 (Fig. 28(a)) as the user information 511. The device managing section 80 and the LCD 83 correspond to the operation state notifying means 60 in Fig. 30.

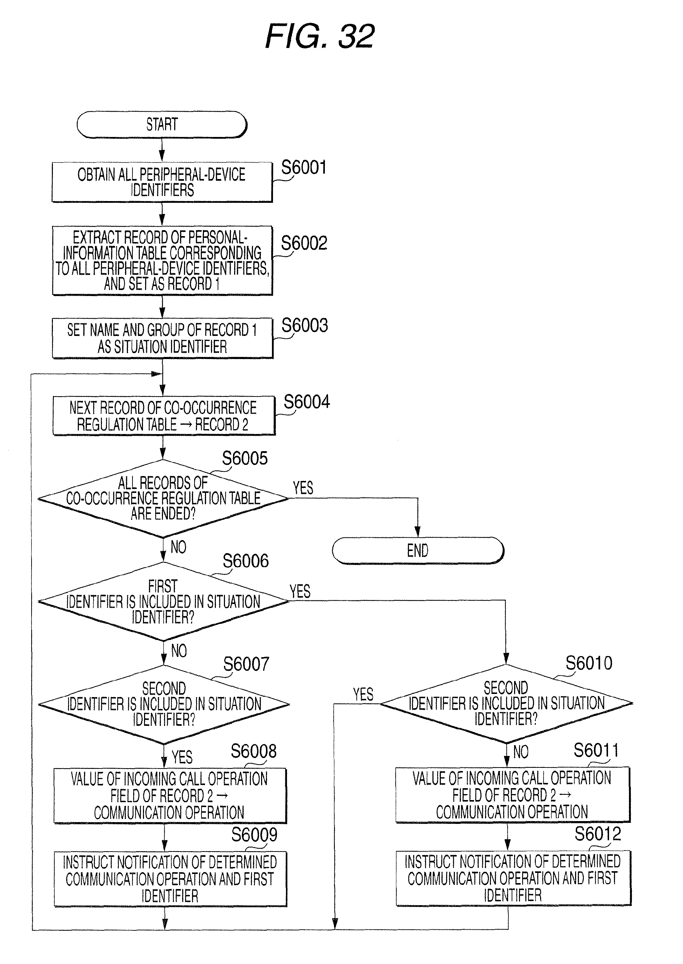

Fig. 32 is a flowchart showing a process procedure in the case where the communication operation determining means 40 in Embodiment 7 of the invention determines the communication operation of the communicating means 20 and outputs the operation state notification instructions 601. In step S6001, first, the communication operation determining means 40 obtains the peripheral-device identifiers of all peripheral devices existing at a short distance, from the RFID reader 31. Next, in step S6002, the communication operation determining means 40 extracts records corresponding to all peripheral-device identifiers obtained in step S6001, from the personal-information table T511 (Fig. 4), and sets them as the record 1.

In step S6003, the communication operation determining means 40 set the values of the name field F5111 and group field F5114 of the record 1 obtained in step S6002, as situation identifies. The processes of steps S6004 to S6012 are executed by the communication operation determining means 40 on all records of the co-occurrence regulation table T552 (Fig. 28(a)). When the determination of step S6005 determines that all of the records have been processed (YES), the process is ended.

In step S6004, the communication operation determining means 40 extracts one record from the co-occurrence regulation table T552, and sets it as the record 2. In step S6006, the communication operation determining means 40 determines whether the value of the first identifier field (F5521) of the record 2 is included in the situation identifies obtained in step S6003 or not. If included (YES), the process proceeds to step S6010, and, if not included (NO), the process proceeds to step S6007.

In step S6007, the communication operation determining means 40 determines whether the value of the second identifier field (F5522) of the record 2 is included in the situation identifies obtained in step S6003 or not. If included (YES), the process proceeds to step S6008, and, if not included (NO), the process proceeds to step S6004. In step S6008, the communication operation determining means 40 determines the value of the incoming call operation field (F5523) of the record 2 as the communication operation. In step S6009, the communication operation determining means 40 outputs the operation state notification instructions 601 to the device managing section 80 so as to notify the values of the communication operation and first identifier field (F5521) of the record 2 which have been determined in the processes performed in preceding and including step S6008.

In step S6010, the communication operation determining means 40 determines whether the value of the second identifier field (F5522) of the record 2 is included in the situation identifies obtained in step S6003 or not. If not included (NO), the process proceeds to step S6011, and, if included (YES), the process proceeds to step S6004. In step S6011, the communication operation determining means 40 determines the value of the incoming call operation field (F5523) of the record 2 as the communication operation. In step S6012, the communication operation determining means 40 outputs the operation state notification instructions 601 to the device managing section 80 so as to notify the values of the communication operation and second identifier field (F5522) of the record 2 which have been determined in the processes performed in preceding and including step S6011.

The process which advances in the sequence of steps S6006 -> S6007 - > S6008 corresponds to a process of, in the case where a peripheral device corresponding to the situation identifier indicated by the value of the second identifier field (F5522) exists at a short distance from the portable telephone terminal 1, driving the incoming call operation for an incoming call from a portable telephone terminal corresponding to the calling party attribute indicated by the value of the first identifier field (F5521) of the record. By contrast, the process which advances in the sequence of steps S6006 -> S6010 -> S6011 corresponds to a process of, in the case where a peripheral device corresponding to the situation identifier indicated by the value of the first identifier field (F5521) exists at a short distance from the portable telephone terminal 1, driving the incoming call operation for an incoming call from a portable telephone terminal corresponding to the calling party attribute indicated by the value of the second identifier field (F5522) of the record.

Namely, the communication operation determining means 40 instructs the operation state notifying means 60 to notify the calling party attribute in which co-occurrence with a peripheral device existing at a short distance from the portable telephone terminal 1 is regulated, and the regulated incoming call operation, as the state of the communication operation.

The process which advances in the sequence of steps S6006 -> S6010 - > S6004 corresponds to a process in which, in the case where both two identifiers in which mutual co-occurrence is regulated are included in the situation identifier, i.e., the case where both external terminals in which mutual co-occurrence is regulated exist at a short distance from the portable telephone terminal 1, the communication operation determining means 40 determines that information relating to the regulation is not notified. The communication operation determining means 40 operates in this way in order to prevent the user of an external terminal existing at a short distance from knowing that an incoming call operation is regulated in the portable telephone terminal 1.

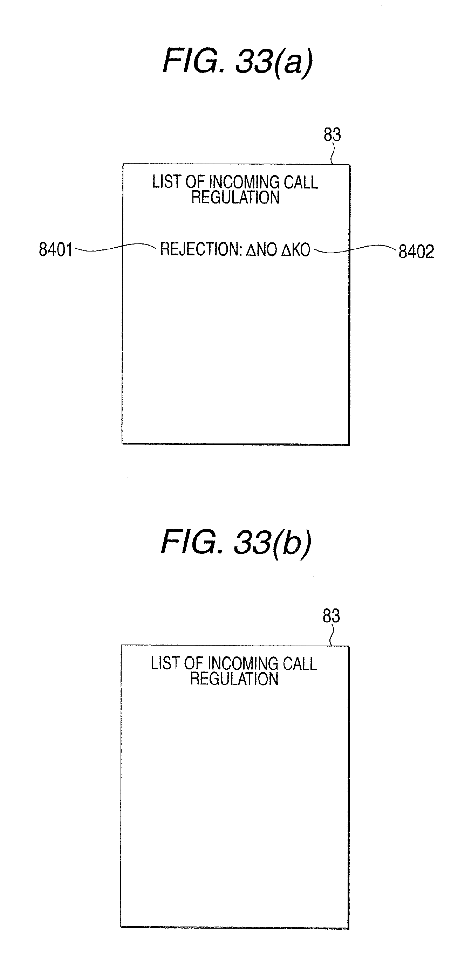

Fig. 33 is a view illustrating display examples of the LCD 83 corresponding to the operation state notifying means 60 of the portable telephone terminal 1 in Embodiment 7 of the invention. Fig. 33(a) shows a display of the LCD 83 in the case where the third portable telephone terminal 1-c owned by the user "Vyama Vmi" exists at a short distance from the portable telephone terminal 1. Fig. 33(b) shows a display of the LCD 83 in the case where, in addition to the third portable telephone terminal 1-c, the second portable telephone terminal 1-b owned by the user "Δno Δko" exists at a short distance from the portable telephone terminal 1. Hereinafter, the operation of the portable telephone terminal 1 of Embodiment 7 of the invention will be described with reference to Figs. 4, 28(a), and 30 to 33.

First, the operation in the case where only the third portable telephone terminal 1-c exists at a short distance from the portable telephone terminal 1 will be described. In step S6001 of the flowchart of Fig. 32, the communication operation determining means 40 obtains the peripheral-device identifier of "333333CCCC" of the third portable telephone terminal 1-c. In step S6002, the communication operation determining means 40 sets the record R5113 of the personal-information table T511 (Fig. 4), as the record 1. In step S6003, the communication operation determining means 40 obtains the situation identifiers of "Vyama Vmi" and "Colleague". In step S6004, the communication operation determining means 40 sets the record R5521 of the co-occurrence regulation table T552 (Fig. 28(a)), as the record 2.

Since the determination in step S6005 is "NO", the communication operation determining means 40 proceeds to step S6006. The determination in step S6006 is "NO", and the determination in step S6007 is "YES". Therefore, the communication operation determining means 40 proceeds to step S6008. In step S6008, the communication operation determining means 40 sets the value "Incoming call rejection" of the incoming call operation field (F5523) of the record R5521 as the communication operation. In step S6009, the communication operation determining means 40 outputs the operation state notification instructions 601 which instructs to notify the determined communication operation of "Incoming call rejection", and the value "Δno Δko" of the first identifier field (F5521) of the record R5521.

As a result of the above process, as shown in Fig. 33(a), the LCD 83 displays the character string of "Rejection" (8401) corresponding the communication operation of "Incoming call rejection", and the character string of "Δno Δko" (8402) indicating the calling party attribute of the regulated calling party, so that the user is notified of a state where the communication operation determining means 40 determines the communication operation so as to reject an incoming call from "Δno Δko".

Next, the operation in the case where the third portable telephone terminal 1-c and the second portable telephone terminal 1-b exist at a short distance from the portable telephone terminal 1 will be described. In step S6001 of the flowchart of Fig. 32, the communication operation determining means 40 obtains the peripheral-device identifiers of "222222BBBB" and "333333CCCC". In step S6002, the communication operation determining means 40 sets the records R5112 and R5113 of the personal-information table T511 (Fig. 4), as the record 1. In step S6003, the communication operation determining means 40 obtains the situation identifiers of "Vyama Vmi", "Colleague", "Δno Δko", and "Family". In step S6005, the communication operation determining means 40 sets the record R5521 of the co-occurrence regulation table T552 (Fig. 28(a)), as the record 2.

Since the determination in step S6005 is "NO", the communication operation determining means 40 proceeds to step S6006. Since the determination in step S6006 is "YES", the communication operation determining means 40 proceeds to step S6010. Since also the determination in step S6010 is "YES", the communication operation determining means 40 proceeds to step S6004 without outputting the operation state notification instructions 601, and, in the determination of step S6005, the means proceeds to "YES" to end the process.

As a result of the above process, as shown in Fig. 33(b), the LCD 83 does not display the character string indicating the regulated calling party.

As apparent from the above description, when the third portable telephone terminal exists at a short distance, the portable telephone terminal 1 of Embodiment 7 of the invention performs a display indicating that an incoming call from the second portable telephone terminal is regulated. Furthermore, when the third portable telephone terminal, and the second portable telephone terminal in which an incoming call is regulated when the third portable telephone terminal exists at a short distance exist at a short distance, the portable telephone terminal 1 of Embodiment 7 of the invention does not perform the display indicating that an incoming call from the second portable telephone terminal is regulated.

As apparent from the above description, the portable telephone terminal 1 of Embodiment 7 of the invention comprises the operation state notifying means 60 for notifying of the state of the communication operation determined by the communication operation determining means 40, whereby an communication operation for each calling party determined by a peripheral device existing at a short distance from the user is notified to the user. Even in the case where the life scene is not restricted to a location, a time, external noises, and a moving velocity, therefore, it is possible to automatically determine the communication operation depending on the life scene, and the user can check the determined communication operation.

In Embodiments 1 to 7 of the invention, examples of a portable telephone terminal have been described. Any device having communicating means which can identify the calling party may be used. For example, a smart phone, an IP phone, or a fixed phone may be used. Alternatively, an information terminal having a function of receiving an electronic mail, an instant message, a push-to-talk message, or a chat message may be used.

In Embodiments 1 to 7 of the invention, the communicating means is connected with a wireless communication line. Alternatively, any means may be used as far as it performs communication in which the calling party can be identified, or communicating means for performing short-range wireless or wired communication may be used.

In Embodiments 1 to 7 of the invention, the short-range wireless communicating means is configured by the RFID tag and the RFID reader. Alternatively, any wireless communicating means may be used as far as it can detect a peripheral terminal existing at a short distance. For example, communicating means utilizing Bluetooth, a wireless LAN, or a non-contact type IC card may be used, or other communicating means utilizing infrared rays, ultraviolet rays, visible light, an ultrasonic wave, an audible sound, magnetism, or the like may be used.

In Embodiments 1 to 7 of the invention, the communication operation determining means determines one of "Normal notification", "Automatic answer", "Silent notification", and "Incoming call rejection", as the communication operation. The invention is not restricted to this. For example, contents or a pattern of a display, audio output, vibration output of notification of an incoming call or reply message, or a combination of them may be determined.

In Embodiments 1 to 7 of the invention, the user information is the personal-information table. The invention is not restricted to this. Any information may be used as far as it includes information indicating a correspondence between the peripheral-device identifier and the situation identifier.

In Embodiments 1 to 7 of the invention, the user information is the incoming call operation table, the incoming call individual operation table, the situation priority table, or the co-occurrence regulation table. The invention is not restricted to this. Any information may be used as far as it includes information indicating a correspondence between the situation identifier and the calling party identifier.

In Embodiment 7 of the invention, the operation state notifying means is configured by the device managing section and the LCD. Any device may be used as far as it notifies of the state of the communication operation. For example, displaying mean employing a CRT, plasma, organic EL, a phototube, electronic powder, electronic paper, a flash lamp, or an LED may be used. Alternatively, means for performing notification based on sound, vibration, partial deformation of the case, tactile sensation of the surface of the case, the temperature of the surface of the case, or an air flow may be used.

While the invention has been described in detail with reference to specific embodiments, it will be obvious to those skilled in the art that various changes or modifications may be made without the sprit and scope of the invention.

The present application is based on Japanese Patent Application (No. 2005-277750) filed September 26, 2005, and its disclosure is incorporated herein by reference.

### <Industrial Applicability>

The communication device of the invention has an effect that, regardless of a time or a location, a communication operation appropriate to the life scene of the user can be automatically selected, and is useful as a communication device which is assumed to be used in various times and locations.

## Claims

1. A communication device comprising:
a short-range wireless communicating unit for, from a peripheral device existing at a short distance, obtaining information of said peripheral device by wireless, and outputting a peripheral-device identifier which identifies said peripheral device;
a communicating unit for executing a communicating process, and outputting a calling party identifier which identifies a calling party; and
a communication operation determining unit for determining a connecting operation for an occasion when said communicating unit establishes communication, wherein
said communication operation determining unit determines the connecting operation on the basis of the peripheral-device identifier and the calling party identifier.

2. The communication device according to claim 1, wherein
said communication operation determining unit derives a situation identifier indicating a situation of a periphery of said communication device, from the peripheral-device identifier, and
said communication operation determining unit determines the operation of said communicating unit on the basis of the situation identifier.

3. The communication device according to claim 2, wherein
the situation identifier includes information identifying a user of said peripheral device or a group to which the user of said peripheral device belongs.

4. The communication device according to claim 2 or 3, wherein
said communication operation determining unit determines the operation of said communicating unit on the basis of user information indicating a correspondence between the situation identifier and the calling party identifier.

5. The communication device according to claim 4, wherein
the user information includes information indicating a correspondence between the peripheral-device identifier and the situation identifier, and said communication operation determining unit derives the situation identifier from the peripheral-device identifier on the basis of the user information.

6. The communication device according to claim 4 or 5, wherein
said communication device comprises user information setting unit for setting the user information.

7. The communication device according to any one of claims 1 to 6, wherein
said communication device comprises an operation state notifying unit for notifying of a state of the operation determined by said communication operation determining unit.

8. The communication device according to any one of claims 1 to 7, wherein
said short-range wireless communicating unit transmits an own-device identifier which identifies said communication device, to said peripheral device.

9. The portable telephone terminal comprising a communication device according to any one of claims 1 to 8, an audio inputting device, an audio outputting device, an incoming call notifying device, an operation inputting device, and a display device.
